(19) **Europäisches Patentamt**
**European Patent Office**
**Office européen des brevets**

(11) **EP 2 330 812 B1**

(12) **EUROPEAN PATENT SPECIFICATION**

(45) Date of publication and mention
of the grant of the patent:
**05.12.2012 Bulletin 2012/49**

(51) Int Cl.:
*H04N 5/232* (2006.01)    *G06T 3/40* (2006.01)
*G03B 37/04* (2006.01)    *H04N 5/247* (2006.01)

(21) Application number: **10188318.9**

(22) Date of filing: **21.10.2010**

(54) **Apparatus for generating a panoramic image, method for generating a panoramic image, and computer-readable medium**

Vorrichtung zur Erzeugung eines Panoramabildes, Verfahren zur Erzeugung eines Panoramabildes und computerlesbares Medium

Appareil de génération d'une image panoramique, procédé de génération d'une image panoramique et support lisible sur ordinateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2009 JP 2009247758**

(43) Date of publication of application:
**08.06.2011 Bulletin 2011/23**

(73) Proprietor: **Sony Corporation**
**Tokyo 108-0075 (JP)**

(72) Inventor: **Ono, Hiroaki**
**Minato-ku**
**Tokyo 108-0075 (JP)**

(74) Representative: **Jackson, Jonathan Andrew**
**D Young & Co LLP**
**120 Holborn**
**London EC1N 2DY (GB)**

(56) References cited:
**EP-A2- 1 377 026     US-A- 6 157 747**
**US-B1- 6 456 323**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to image processing apparatuses, image processing methods, and computer-executable instructions.

In general, a technique of generating a panorama image by superposing and synthesizing a plurality of still images which have been captured using a digital VCR (video cassette recorder) incorporating a camera or the like with each other has been used (refer to Japanese Patent Application Publication No. 2003-198902, for example). Since a panorama image is obtained by arranging and synthesizing a plurality of still images, a region larger than a region which serves as an object of image capturing in a space when a still image is to be captured is displayed as a subject in the panorama image.

However, if a subject which has been moving (hereinafter referred to as a "moving subject" where appropriate) is not taken into consideration when a panorama image is to be generated and still images are simply overlapped with one another, regions in the vicinity of the moving subject may blur at portions in which the still images are overlapped with each other, or a portion of the moving subject may lack. Generation of such a blur or a lack causes deterioration of quality of the panorama image.

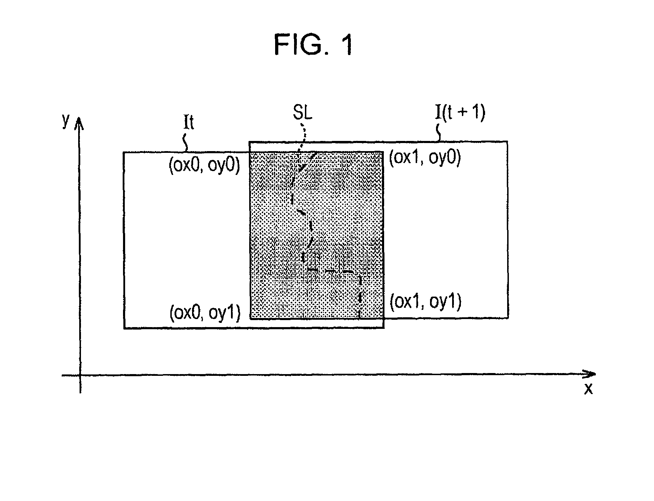

Therefore, taking a moving subject into consideration, a method utilizing a solution of a shortest path problem in a graph theory has been proposed as a method for detecting joint portions for connection among the still images (refer to "Image Mosaic Generation Method for Generating Panorama Image", Kensho Iiyoshi and Wataru Mihashi, pages 6 to 11, the 2008 June issue of Image Lab published by Japan Industrial Publishing Co., Ltd. in August 5, 2008) In this method, as shown in Fig. 1, a joint line SL included in a region in which two still images It and I(t+1) which are adjacent to each other are overlapped with each other is determined. Note that, in Fig. 1, a horizontal direction and a vertical direction denote an x direction and a y direction, respectively, and the still images It and I(t+1) are arranged so as to be overlapped with each other in an xy coordinate system.

In an example shown in Fig. 1, the joint line SL corresponding to the smallest cost is calculated using cost values calculated in the region in which the still images It and I(t+1) are overlapped with each other. Specifically, a high cost is set to a moving subject included in the still images whereas a low cost is set to a still subject, a two-dimensional graph is generated, and the joint line SL corresponding to the smallest cost is determined. Accordingly, the joint line SL which prevents the moving subject included in the still image from being divided is obtained.

After the joint line SL is calculated, a portion in a range from a left end of the still image It to a portion in the vicinity of the joint line SL of the still image It and a portion in a range from a portion in the vicinity of the joint line SL of the still image I(t+1) to a right end of the still image I(t+1) are synthesized with each other so that a panorama image is obtained.

As described above, since the joint line SL which prevents the moving subject from being divided is obtained before the still images are synthesized with each other, a blur or a lack is prevented from being generated when the synthesis is performed and a panoramic image of higher quality may be obtained.

However, when the method for obtaining a joint line corresponding to the smallest cost by calculating cost values in a region in which still images are overlapped with each other is employed, a memory which stores a two-dimensional cost map, i.e., a cost map of x and y directions may be used and a calculation cost of a determination of the shortest path also becomes larger.

Other prior art includes US 6 456 323 B1, which discloses a method of locating a compositing region between images forming a panoramic image using sum-of-absolute-difference (SAD) values, and US 6 157 747A, which discloses an invention for aligning a set of plural images to construct a mosaic image.

It is desirable to realize a high-quality panorama image with a low calculation cost.

SUMMARY Consistent with an exemplary embodiment, there is provided an apparatus for generating a panoramic image defined according to Claim 1.

Consistent with another exemplary embodiment, there is provided a method for generating a panoramic image defined according to Claim 7.

Consistent with another exemplary embodiment, there is provided a non-transitory computer-readable medium tangibly embodied in a storage device encoded with instructions which, when executed on a processor, perform a method for generating a panoramic image defined in Claim 7.

Preferably the embodiments relate to an image processing apparatus, an image processing method and a computer-readable medium in which a high-quality panorama image is obtained with a low calculation cost.

Various respective aspects and features of the invention are defined in the appended claims.

Embodiments of the invention will now be described with reference to the accompanying drawings, throughout which like parts are referred to by like references, and in which:

Fig. 1 is a diagram illustrating a method for searching for a joint line in the related art;
Fig. 2 is a diagram illustrating an exemplary embodiment of a configuration of an image pickup apparatus;

Fig. 3 is a diagram illustrating an exemplary embodiment of a configuration of an image processing circuit;
Fig. 4 is a flowchart illustrating an exemplary process of generating a panorama image;
Fig. 5 is a diagram illustrating an exemplary projection of a captured image to a cylindrical area;
Fig. 6 is a diagram illustrating an exemplary relationship between an imaging area and a cylindrical area;
Fig. 7 is a diagram illustrating an exemplary calculation of subject information;
Fig. 8 is a diagram illustrating exemplary moving subject score values at various positions in a sweep axis;
Fig. 9 is a diagram illustrating an exemplary search for a joint line;
Fig. 10 is a diagram illustrating exemplary searches for joint lines;
Fig. 11 is a diagram illustrating exemplary connections among effective regions of captured images;
Fig. 12 is a diagram illustrating an exemplary trimming of a panorama image;
Fig. 13 is a diagram illustrating another exemplary trimming of a panorama image;
Fig. 14 is a diagram illustrating an exemplary calculation of subject information;
Fig. 15 is a diagram illustrating another exemplary calculation of subject information;
Fig. 16 is a diagram illustrating another exemplary calculation of subject information;
Fig. 17 is a diagram illustrating an exemplary order of determination of connection lines;
Fig. 18 is a diagram illustrating another exemplary order of determination of connection lines; and
Fig. 19 is a diagram illustrating an exemplary configuration of a computer.

Exemplary embodiments consistent with the present invention will be described hereinafter with reference to the accompanying drawings.

Configuration of Image Pickup Apparatus

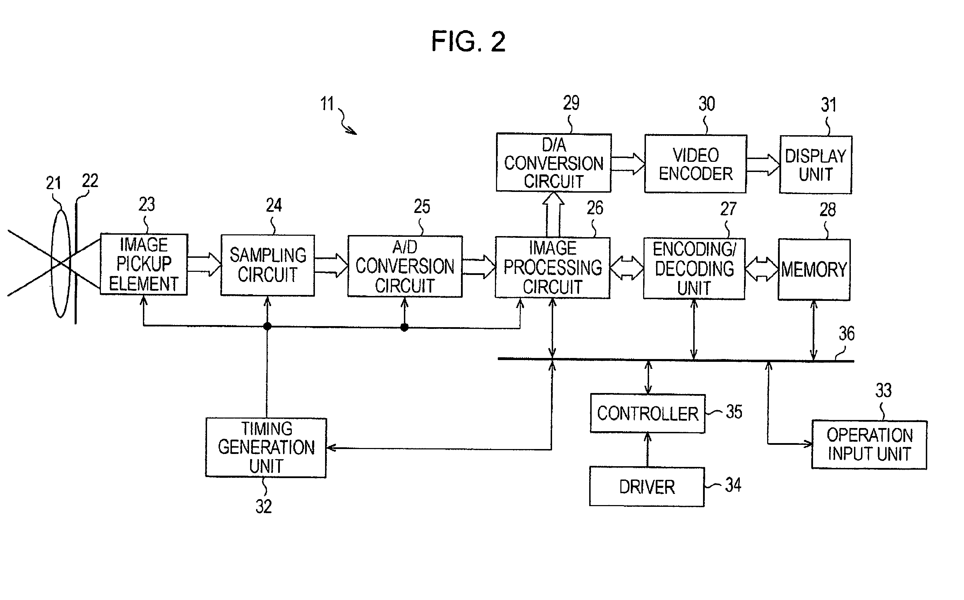

Fig. 2 is a diagram illustrating an example of a configuration of an image pickup apparatus 11.

The image pickup apparatus 11 mainly includes an optical system, a signal processing system, a recording system, a display system, and a control system.

Specifically, the optical system includes a lens 21 which collects an optical image of a subject, an aperture 22 which controls a light amount of the optical image supplied from the lens 21, and an image pickup element 23 which performs photoelectric conversion on the collected optical image so as to obtain an electric signal. The image pickup element 23 includes, for example, a CCD (Charge Coupled Devices) image sensor or a CMOS (Complementary Metal Oxide Semiconductor) image sensor.

The signal processing system includes a sampling circuit 24, an A/D (Analog/Digital) conversion circuit 25, and an image processing circuit 26. The sampling circuit 24 which is realized by a CDS (Correlated Double Sampling) circuit, for example, and performs sampling on the electric signal supplied from the image pickup element 23 so as to obtain an analog signal. By this, noise generated in the image pickup element 23 is reduced. The analog signal obtained by the sampling circuit 24 corresponds to an image signal used to display an image of the captured subject.

The A/D conversion circuit 25 converts the analog signal supplied from the sampling circuit 24 into a digital signal and supplies the digital signal to the image processing circuit 26. The image processing circuit 26 performs a predetermined image process on the digital signal supplied from the A/D conversion circuit 25.

Furthermore, the recording system includes an encoding/decoding unit 27 which encodes or decodes an image signal and a memory 28 which records the image signal. The encoding/decoding unit 27 encodes the image signal corresponding to the digital signal which has been processed by the image processing circuit 26 and instructs the memory 28 to store the image signal, and reads and decodes the image signal from the memory 28 and supplies the image signal to the image processing circuit 26.

The display system includes a D/A (Digital/Analog) conversion circuit 29, a video encoder 30, and a display unit 31.

The D/A conversion circuit 29 converts the image signal which has been processed by the image processing circuit 26 into an analog image signal and supplies the image signal to the video encoder 30. The video encoder 30 encodes the image signal supplied from the D/A conversion circuit 29 so as to obtain a video signal having a format suitable for the display unit 31. The display unit 31 which is realized by an LCD (Liquid Crystal Display) or the like displays an image corresponding to the video signal obtained through the encoding performed by the video encoder 30. Furthermore, the display unit 31 functions as a finder when a subject is captured.

The control system includes a timing generation unit 32, an operation input unit 33, a driver 34, and a controller 35. Furthermore, the image processing circuit 26, the encoding/decoding unit 27, the memory 28, the timing generation unit 32, the operation input unit 33, and the controller 35 are connected to one another through a bus 36.

The timing generation unit 32 controls timings of operations of the image pickup element 23, the sampling circuit 24, the A/D conversion circuit 25, and the image processing circuit 26. The operation input unit 33 including buttons and switches receives a shutter operation or other command inputs performed by a user and supplies a signal to the controller 35 in response to a user's operation.

Predetermined peripheral devices are connected to the driver 34 and the driver 34 drives the connected peripheral devices. For example, the driver 34 reads data from a recording medium connected thereto such as a magnetic disk, an optical disc, a magneto-optical disc, or a semiconductor memory and supplies the data to the controller 35.

The controller 35 controls the entire image pickup apparatus 11. For example, the controller 35 reads control instructions from the recording medium connected to the driver 34 and controls entire operation of the image pickup apparatus 11 in accordance with the control instructions, a command supplied from the operation input unit 33, or the like.

The operation of the image pickup apparatus 11 will now be described.

In the image pickup apparatus 11, incident light from a subject, i.e., an optical image of a subject, is encountered in the image pickup element 23 through the lens 21 and the aperture 22, and is subjected to photoelectric conversion by the image pickup element 23 so that an electric signal is obtained. Noise component of the electric signal obtained by the image pickup element 23 is removed by the sampling circuit 24, and the electric signal is converted into a digital signal by the A/D conversion circuit 25. The digital signal is temporarily stored in an image memory, not shown, incorporated in the image processing circuit 26.

Note that, in a normal state, that is, in a state before a shutter operation is performed, the timing generation unit 32 performs timing control on the signal processing system so that the image signal stored in the image memory included in the image processing circuit 26 is constantly replaced by another image signal supplied from the A/D conversion circuit 25 in a predetermined frame rate. The image signal which is a digital signal and which is stored in the image memory of the image processing circuit 26 is converted into an analog signal by the D/A conversion circuit 29, and further converted into a video signal by the video encoder 30. Then, an image corresponding to the video signal is displayed in the display unit 31.

In this case, the display unit 31 also functions as a finder of the image pickup apparatus 11. The user determines a composition while viewing the image displayed in the display unit 31 and presses a shutter button serving as the operation input unit 33 so as to instruct image capturing. When the shutter button is pressed, the controller 35 controls, in accordance with a signal supplied from the operation input unit 33, the timing generation unit 32 so that the image signal obtained immediately after the shutter button is pressed is stored. In this way, the signal processing system is controlled so that the image signal stored in the image memory included in the image processing circuit 26 is not replaced by another image signal.

Thereafter, the image signal which has been stored in the image memory included in the image processing circuit 26 is encoded by the encoding/decoding unit 27 and recorded in the memory 28. Through the operation performed by the image pickup apparatus 11 as described above, obtainment of a signal of a single image is completed.

Configuration of Image Processing Circuit

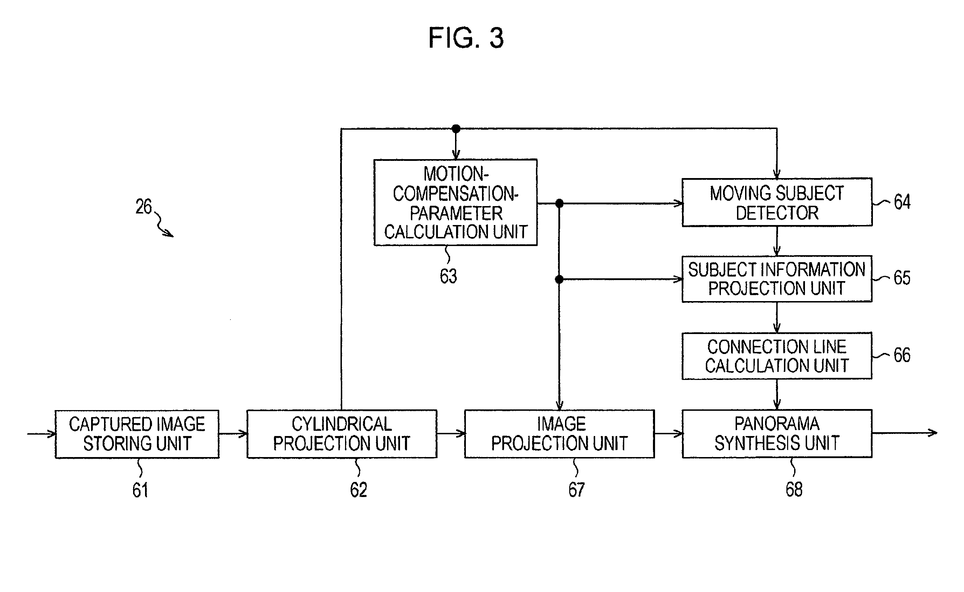

Furthermore, the image processing circuit 26 shown in Fig. 2 may be configured as shown in Fig. 3 in detail.

Specifically, the image processing circuit 26 may include a captured image storing unit 61, a cylindrical projection unit 62, a motion-compensation-parameter calculation unit 63, a moving subject detector 64, a subject information projection unit 65, a connection line calculation unit 66, an image projection unit 67, and a panorama synthesis unit 68.

The captured image storing unit 61 receives an image of a subject captured by the image pickup apparatus 11 (hereinafter referred to as a "captured image"), and stores a plurality of supplied captured images. The captured images supplied to the captured image storing unit 61 correspond to images which have been continuously captured in a state in which the image pickup apparatus 11 is moved (swept) in a predetermined direction. When the images are captured, the image pickup apparatus 11 is moved such that an identical subject is included in two images which are consecutively captured.

Note that it is assumed that, among the captured images which have been consecutively captured, a t-th captured image is referred to as a "captured image of a frame t" where appropriate.

The cylindrical projection unit 62 reads the captured images from the captured image storing unit 61 and projects the captured images which have been read on a cylindrical area. The cylindrical projection unit 62 supplies the captured images which have been projected on the cylindrical area to the motion-compensation-parameter calculation unit 63, the moving subject detector 64, and the image projection unit 67.

The motion-compensation-parameter calculation unit 63 calculates motion compensation parameters used to compensate for a motion (movement) of the image pickup apparatus 11 among frames of the captured images in accordance with the captured images supplied from the cylindrical projection unit 62, and supplies the motion compensation parameters to the moving subject detector 64, the subject information projection unit 65, and the image projection unit 67. For example, the motion compensation parameters correspond to information representing the relative positional relationships among the captured images obtained when the captured images are arranged such that identical subjects are substantially overlapped with one another.

The moving subject detector 64 detects the subject which has been moving using the motion compensation parameters supplied from the motion-compensation-parameter calculation unit 63 and the captured images supplied from the cylindrical projection unit 62, and supplies subject information representing a result of the detection to the subject information projection unit 65. For example, the subject information relates to a movement such as a degree of a movement of the subject in regions included in the captured images. Note that the subject which has been moving, that is, a subject which has been moving in an actual space, is referred to as a "moving subject" where appropriate.

The subject information projection unit 65 projects the subject information supplied from the moving subject detector 64 on a sweep axis using the motion compensation parameters supplied from the motion-compensation-parameter calculation unit 63, and supplies a result of the projection to the connection line calculation unit 66. Note that the sweep axis extends in a direction in which the image pickup apparatus 11 is moved when the images are captured, and the direction of the sweep axis is determined in advance.

The connection line calculation unit 66 obtains connection lines corresponding to connection positions among the captured images of the consecutive frames connected to one another in accordance with a result of the projection of the subject information supplied from the subject information projection unit 65, and supplies connection line information representing the positions of the connection lines to the panorama synthesis unit 68. The connection lines extend perpendicular to the sweep axis.

The image projection unit 67 projects the captured images supplied from the cylindrical projection unit 62 in a panorama coordinate system using the motion compensation parameters supplied from the motion-compensation-parameter calculation unit 63, and supplies the captured images which have been projected to the panorama synthesis unit 68. Note that the panorama coordinate system corresponds to a two-dimensional coordinate system including an axis which extends perpendicular to the sweep axis and the sweep axis, that is, a predetermined plane, and is determined in advance.

The panorama synthesis unit 68 connects the captured images which have been supplied from the image projection unit 67 and which have been projected in the panorama coordinate system to one another using the connection line information supplied from the connection line calculation unit 66 so as to generate a single panorama image. The panorama image includes an entire region in an image capturing space which is an object of the capturing of the images as a subject.

Explanation of Process of Generating Panorama Image

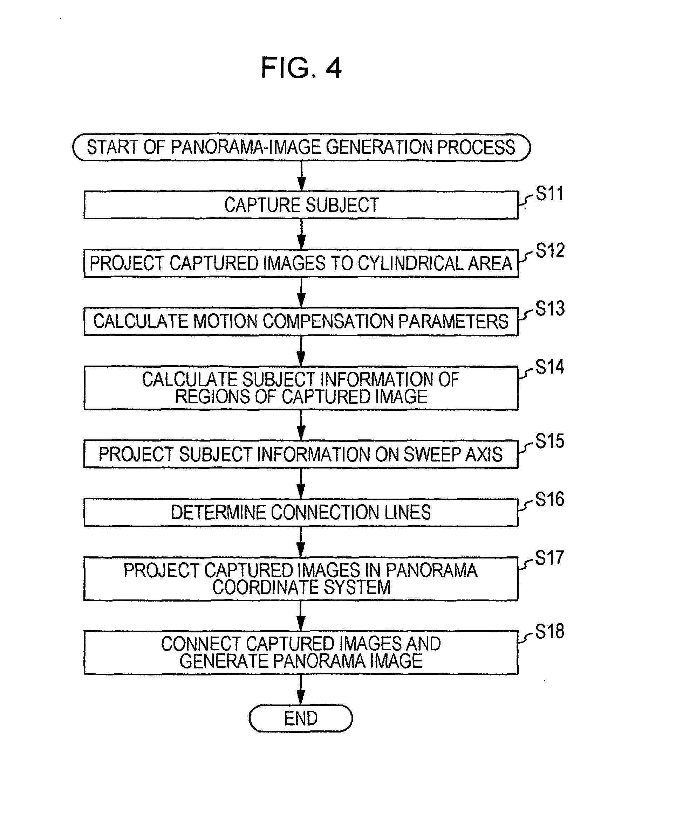

When the user operates the operation input unit 33 so as to instruct a generation of a panorama image, the image pickup apparatus 11 starts a process of generating a panorama image starting from capturing of images. Referring to a flowchart shown in Fig. 4, the process of generating a panorama image performed by the image pickup apparatus 11 will be described hereinafter.

In step S11, the image pickup element 23 captures a subject in a state in which the image pickup apparatus 11 is moved. For example, the user moves the image pickup apparatus 11 in a predetermined direction while a plurality of consecutive images are captured by the image pickup apparatus 11.

Since light emitted from the subject is incident on the image pickup element 23 through the lens 21 and the aperture 22, the image pickup element 23 performs photoelectric conversion on the incident light so that captured images are obtained. The obtained captured images (image signals) are supplied from the image pickup element 23 to the memory 28 through the sampling circuit 24 to the encoding/decoding unit 27 to be recorded. Here, the captured images are encoded by the encoding/decoding unit 27. Furthermore, when the captured images are recorded in the memory 28, frame numbers are assigned to the captured images in order of image capturing.

After the plurality of captured images are successively recorded in the memory 28, the encoding/decoding unit 27 reads the captured images from the memory 28, decodes the captured images, and supplies the captured images to the captured image storing unit 61 included in the image processing circuit 26 which stores the captured images.

Note that the obtained captured images may be directly supplied to the captured image storing unit 61 without being stored in the memory 28. Furthermore, the captured images may be a single captured still image or an image for one frame included in a captured moving image.

In step S12, the cylindrical projection unit 62 sequentially reads the captured images stored in the captured image storing unit 61 and projects the read captured images on the predetermined cylindrical area in accordance with focal point distances obtained when the images are captured.

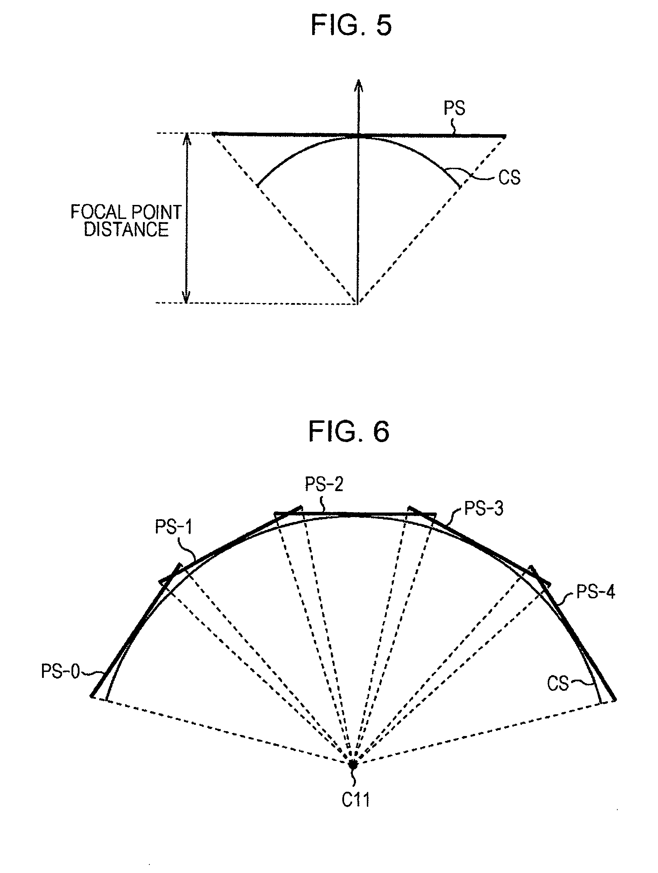

For example, as shown in Fig. 5, an image obtained by capturing an imaging area PS is projected (thrown) on a cylindrical area CS which is a circumference surface of a cylinder having a radius corresponding to a focal point distance of the lens 21 obtained at a time of image capturing. That is, the imaging area PS is projected on the cylindrical area. In the example shown in Fig. 5, the cylindrical area CS is connected to the center of the imaging area PS. Note that the focal point distance of the lens 21 is obtained from a position of the lens 21 at the time of image capturing.

As described above, when a panorama image is to be generated, displacement (differences) between positions of subjects included in captured images which are connected to each other may be suppressed as much as possible by projecting the captured images on a cylindrical area.

For example, it is assumed that, in a state in which an optical center point C11 serves as an optical center of the image pickup apparatus 11, the user controls the image pickup apparatus 11 to capture a plurality of images while the image pickup apparatus 11 is turned (swept) in a clockwise direction using the optical center point C11 at the center as shown in Fig. 6. Note that portions in Fig. 6 corresponding to those shown in Fig. 5 are denoted by reference numerals the same as those shown in Fig. 5, and therefore, descriptions thereof are omitted where appropriate.

In the example shown in Fig. 6, five images are captured while five imaging areas PS-0 to PS-4 are set. Then, the captured images are individually projected on the cylindrical area CS. The cylindrical area CS corresponds to the circumference surface of the cylinder which has the optical center point C11 at the center and which has a radius corresponding to the focal point distance.

Here, a case where the captured images are synthesized with one another so that a panorama image is generated will be described. In Fig. 6, edge portions of the imaging areas adjacent to each other which are overlapped with each other are spatially displaced from each other in a radius direction of the cylindrical area CS, and therefore, if the captured images are arranged by being overlapped with each other without change, displacement of positions of subjects occurs and identical subjects are not overlapped with each other. Accordingly, quality of the panorama image is deteriorated.

To address this problem, when the captured images are projected on the cylindrical area CS and the captured images which have been projected are overlapped and synthesized with each other so that a panorama image is generated, displacement (differences) between the positions of the subjects included in the captured images may be suppressed to be small when compared with the case where the captured images are synthesized without change. As described above, by projecting the captured images on the cylindrical area CS, differences between the positions of the subjects generated among the captured images may be reduced. As a result, a high-quality panorama image is obtained.

Returning back to the description of the flowchart shown in Fig. 4, after projecting the captured images on the cylindrical area, the cylindrical projection unit 62 supplies the captured images which have been projected to the motion-compensation-parameter calculation unit 63, the moving subject detector 64, and the image projection unit 67, and the process proceeds from step S12 to step S 13.

In step S13, the motion-compensation-parameter calculation unit 63 calculates motion compensation parameters of the captured images supplied from the cylindrical projection unit 62 and supplies the motion compensation parameters to the moving subject detector 64, the subject information projection unit 65, and the image projection unit 67.

For example, the motion-compensation-parameter calculation unit 63 calculates global motion vectors of the captured images as the motion compensation parameters using captured images of consecutive two frames among the captured images by extraction of characteristic points or block matching.

The global motion vectors represent movements of the entire subjects included in the captured images among the frames. Since most of the subjects included in the captured images are motionless objects in an actual space, the global motion vectors represent movements of the motionless subjects included in the captured images among the frames, that is, movements of the image pickup apparatus 11 at the time of image capturing.

Note that the motion compensation parameters are not limited to the global motion vectors and may correspond to a planner projection matrix or an Affine matrix. The planner projection matrix and the Affine matrix are also obtained using captured images of consecutive two frames by extraction of characteristic points or block matching. When the global motion vectors are employed as the motion compensation parameters, the motion compensation parameters are obtained with lower calculation cost when compared with a case where the planner projection matrix or the Affine matrix is employed.

In step S14, the moving subject detector 64 calculates subject information in regions of the captured images using the motion compensation parameters supplied from the motion-compensation-parameter calculation unit 63 and the captured images supplied from the cylindrical projection unit 62, and supplies the subject information to the subject information projection unit 65.

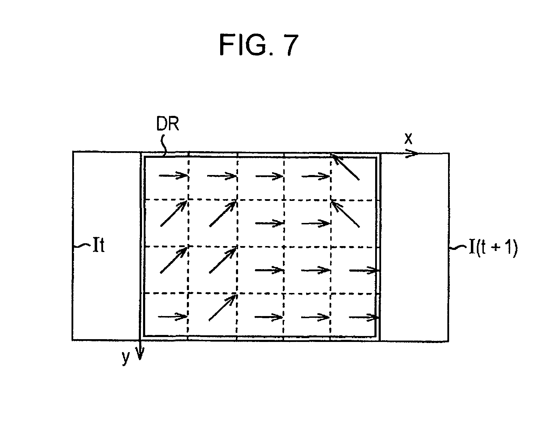

For example, as shown in Fig. 7, the moving subject detector 64 arranges a captured image It and a captured image I(t+1) of two consecutive frames t and t+1, respectively, so that identical subjects included in the captured images are substantially overlapped with each other using the motion compensation parameters.

Then, the moving subject detector 64 divides an overlapping region DR which is a region in the captured image It which is overlapped with the captured image I(t+1) into a plurality of regions (hereinafter referred to as "blocks") and obtains motion vectors LMV for individual blocks by the block matching.

Specifically, each of the motion vectors LMV of the blocks is obtained by searching the captured image I(t+1) for a region in which a difference between the region and a corresponding one of the blocks of the captured image It is the smallest. For example, the difference between the region and the corresponding one of the blocks of the captured image It corresponds to a sum of absolute values of differences between pixel values included in the block and corresponding pixel values included in the captured image I(t+1).

In Fig. 7, one of squares defined by dotted lines included in the overlapping region DR denotes a single block, and arrow marks included in the blocks represent the motion vectors LMV of the blocks. The motion vectors LMV represent motions, among the frames, of subjects included in the regions of the captured images in a state in which the captured images It and I(t+1) are arranged using the motion compensation parameters.

Next, the moving subject detector 64 calculates a motion vector GMV (global motion vector) representing a motion of the entire captured image It using the obtained motion vectors LMV of the blocks. For example, the global motion vector GMV corresponds to a median of the motion vectors LMV of the blocks.

Note that the motion vector GMV may be obtained by robust estimation or may correspond to a motion vector LMV, among the obtained motion vector LMV of the blocks, which has a direction and a degree which have the most frequently detected.

Since the global motion vector GMV obtained as described above represents motions of all subjects included in the captured image, a block including a motion vector LMV different from the motion vector GMV includes a moving subject in the actual space.

Furthermore, the moving subject detector 64 calculates cost values representing presence/absence of a moving subject and degrees of movements of the moving subject (motion degree) in positions of the overlapping region DR included in the captured image It using the global motion vector GMV and the motion vectors LMV of the blocks.

Specifically, assuming that an xy coordinate system has an upper left corner of the overlapping region DR shown in Fig. 7 serving as a reference, the moving subject detector 64 calculates a cost value cost(x, y) in a position corresponding to a coordinate (x, y) in the xy coordinate system included in the overlapping region DR in accordance with Expression (1) below. Note that, in the example shown in Fig. 7, a horizontal direction corresponds to an x direction and a vertical direction corresponds to a y direction. The x direction shown in Fig. 7 corresponds to the direction of the sweep axis.

$$\text{cost value cost}(x, y) = |GMV - LMV(x, y)| \quad (1)$$

Note that, in Expression (1), GMV denotes the global motion vector of the captured image It, and LMV(x, y) denotes a motion vector LMV of a block including the portion corresponding to the coordinate (x, y). That is, cost values of the individual positions correspond to absolute values of differences between the global motion vector GMV and the motion vectors LMV of the blocks.

Accordingly, when a cost value in a position included in the overlapping region DR is large, a moving subject which largely moves is displayed in the position. The cost values obtained as described above serve as subject information of the regions of the captured image.

Note that, although an example in which a moving subject is detected for each block, that is, an example in which a motion vector is detected for each block is described in Fig. 7, a motion vector may be detected for each pixel in the overlapping region DR.

Furthermore, although an example in which presence/absence of a moving subject and cost values representing degrees of movements of the moving subject are detected as subject information is described, the subject information in positions of the overlapping region DR may correspond to a binary value representing whether a moving subject is included in the positions.

Note that when multivalued information such as the cost values is used as the subject information, the connection line calculation unit 66 determines a position in which position displacement between subjects is small as a connection line.

That is, the connection line calculation unit 66 determines connection lines which connects captured images which are consecutively captured to each other so that a panorama image is generated. Here, in order to obtain a panorama image having higher quality, a connection line which divides a moving subject is prevented from being determined as much as possible. However, in some cases, a portion included in a moving subject is determined as a connection line since a region corresponding to the moving subject is large, for example.

In such a case, if information representing a degree of the moving subject, that is, cost values are included in subject information, a portion in which a movement of the subject is the smallest may be obtained as a connection line. By this, displacement of images in the vicinity of a connection portion of the captured images which are connected to each other, that is, displacement of positions of subjects of the two captured images obtained when the two captured images are overlapped with each other may be suppressed to the minimum. Accordingly, deterioration of quality of the panorama image may be suppressed.

Referring back to the description of the flowchart shown in Fig. 4, after the moving subject detector 64 supplies the subject information to the subject information projection unit 65, the process proceeds from step S14 to step S15.

In step S15, the subject information projection unit 65 projects the subject information supplied from the moving subject detector 64 on the sweep axis using the motion compensation parameters supplied from the motion-compensation-parameter calculation unit 63. Then, the subject information projection unit 65 calculates moving subject score values which are sums of the cost values serving as the subject information which is projected in positions of the sweep axis for individual positions.

Specifically, by integrating cost values in positions included in a captured image which are located in a direction perpendicular to the sweep axis so that moving subject score values are obtained, projection of the cost values onto the sweep axis is performed. The moving subject score values obtained as results of the projection become larger in proportion to an area (size) and a degree of a movement of a moving subject.

For example, in the example shown in Fig. 7, since the sweep axis extends in parallel to the x direction (x axis), each of moving subject score values in positions on the sweep axis corresponds to a sum of cost values in positions of the captured image, the cost values having x coordinates the same as an x coordinate of a position of interest on the sweep axis. Specifically, it is assumed that a value of x in the xy coordinate system which corresponds to a certain position X on the sweep axis is x0. In this case, a sum of cost values cost(x0, y) in positions corresponding to an x coordinate of x0 in the overlapping region DR is obtained as a moving subject score value in the position X on the sweep axis.

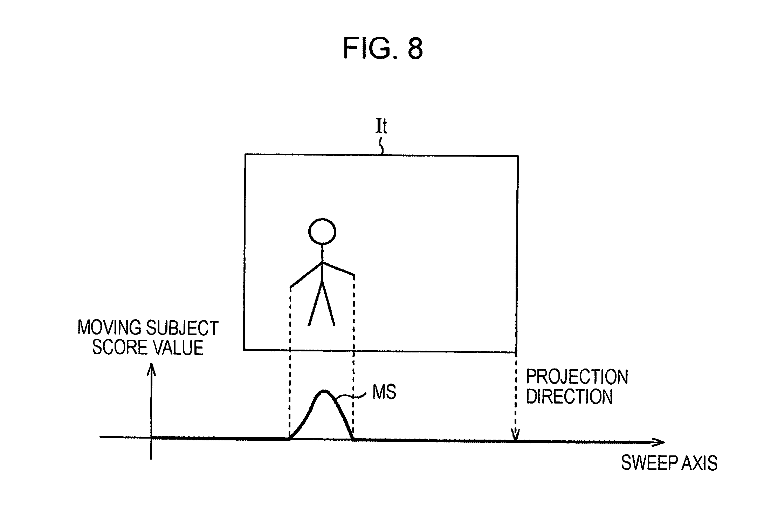

As a result, as shown in Fig. 8, for example, moving subject score values in the positions on the sweep axis are obtained. Note that, in Fig. 8, a horizontal direction corresponds to the direction of the sweep axis, and a vertical direction represents the moving subject score values in the positions on the sweep axis.

Fig. 8 shows the moving subject score values obtained when the cost values of the regions in the captured image It are projected on the sweep axis. A curve MS represents the moving subject score values in positions on the sweep axis.

Since a moving subject representing a person is included in the captured image It in a portion on a slightly left side relative to the center of the captured image It, a moving subject score value is large in a position on the sweep axis corresponding to the portion representing the person. On the other hand, since a cost value of 0 is obtained in portions which do not include moving subjects and cost values are not obtained in regions in which captured images adjacent to each other overlap with each other, a moving subject cost value of 0 is obtained in positions on the sweep axis which correspond to regions of the captured image It which do not include the person.

By this, the subject information projection unit 65 projects the cost values serving as the subject information on the sweep axis and obtains the moving subject score values in the positions on the sweep axis. Note that, in the subject information projection unit 65, the positions on the sweep axis in which the cost values of the regions in captured images are to be projected are determined in accordance with motion compensation parameters of the captured images.

By projecting the subject information on the sweep axis and obtaining the moving subject score values in positions on the sweep axis, two-dimensional information used for determining connection lines may be converted into one-dimensional information. Accordingly, an amount of information used for determining connection lines is reduced, and memory capacity for recording the information is saved.

Referring back to the explanation of the flowchart shown in Fig. 4, after calculating the moving subject score values at in positions on the sweep axis, the subject information projection unit 65 supplies the moving subject score values to the connection line calculation unit 66 and the process proceeds from step S 15 to step S16.

In step S16, the connection line calculation unit 66 determines connection lines used for connecting the captured images to each other in accordance with the moving subject score values supplied from the subject information projection unit 65, and supplies connection line information representing positions of the connection lines to the panorama synthesis unit 68.

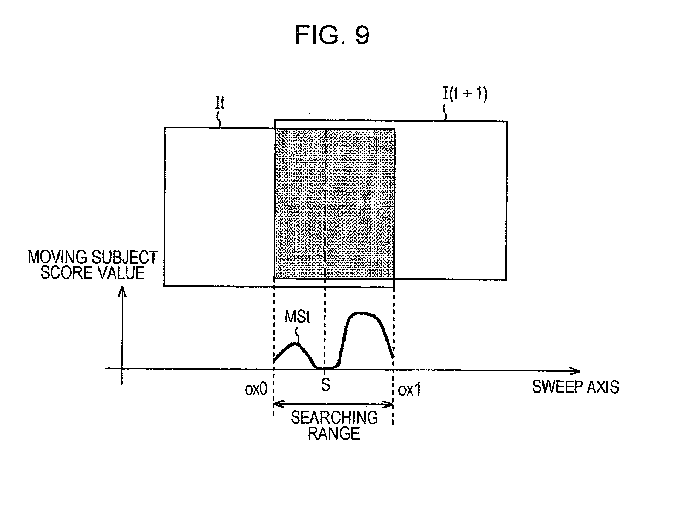

For example, as shown in Fig. 9, it is assumed that moving subject score values represented by a curve MSt are obtained from the captured image It. Note that, in Fig. 9, a horizontal direction represents the direction of the sweep axis whereas a vertical direction represents magnitudes of the moving subject score values in positions on the sweep axis. The moving subject score values become larger on an upper side in Fig. 9.

Before determining a position of a connection line used for connecting the captured images It and I(t+1), the connection line calculation unit 66 determines a range on the sweep axis from a position OX0 to a position OX1 which corresponds to an overlapping region in which the captured images It and T(t+1) are overlapped with each other as a searching range. Note that the position OX0 is located on a left end of the captured image I(t+1) shown in Fig. 9 when the captured image I(t+1) is projected on the sweep axis whereas the position OX1 is located on a right end of the captured image It shown in Fig. 9 when the captured image I is projected to the sweep axis.

The connection line calculation unit 66 determines a position in which the minimum moving subject score value is obtained in the searching range from the position OX0 to the position OX1 as a position of the connection line between the captured images It and I(t+1).

In the example shown in Fig. 9, since the minimum moving subject score value among the moving subject score values represented by the curve MSt is obtained in a position S on the sweep axis included in the searching range, the position S is determined as the position of the connection line. Accordingly, a line which extends perpendicular to the sweep axis and which includes the position S on the sweep axis included in the captured image It (captured image I(t+1)) is determined as the connection line.

Since the position S corresponding to the position of the connection line has the minimum moving subject score value in the searching range, a movement of the subject is the smallest among the positions arranged in a direction of the sweep axis included in the captured images. Specifically, the position S corresponds to a position in which the minimum displacement between the captured images It and T(t+1) which are arranged in a predetermined plane so that identical subjects are substantially overlapped with each other in accordance with the motion compensation parameters is obtained. The displacement between the images means a displacement between positions of subjects included in the captured images and a difference between colors of pixels included in a region in which the captured images are overlapped with each other.

As described above, when captured images are arranged, a position in which images in the captured images in a portion in which the captured images are overlapped with each other are most similar to each other is determined as a connection line. Accordingly, a more natural high-quality panorama image is obtained. In addition, the connection line calculation unit 66 speedily and easily determine a connection line through a one-dimensional searching process in which a sweep axis is searched for a position in which the minimum division cost of a moving subject is attained.

The connection line calculation unit 66 performs the searching process described with reference to Fig. 9 so as to determine connection lines between the captured images of the frames adjacent to each other for all the captured images.

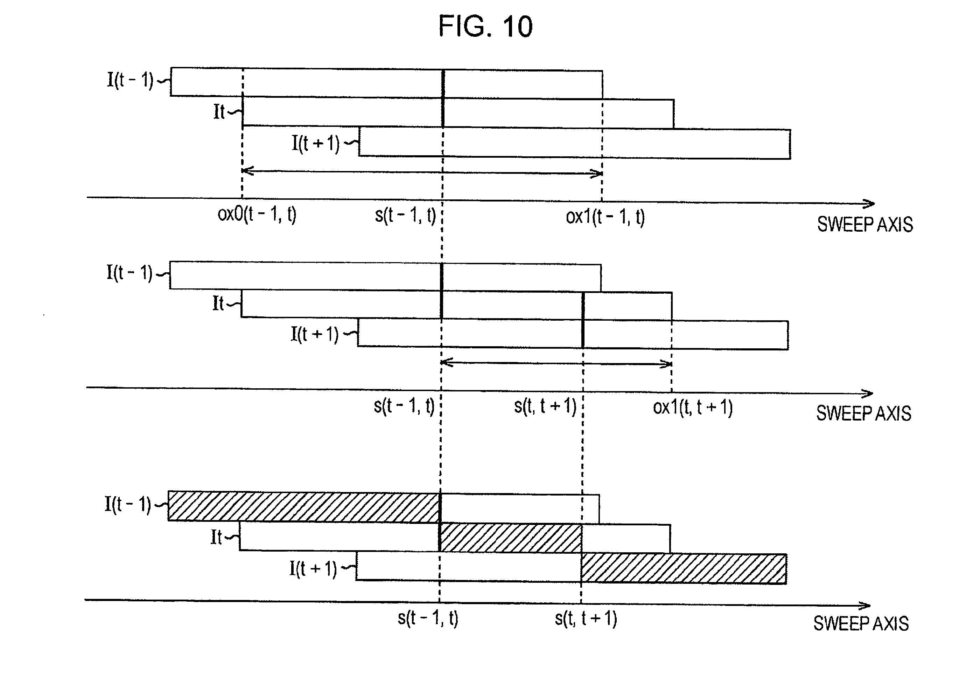

For example, the connection line calculation unit 66 determines the connection lines between the captured images in ascending order of frame numbers, i.e., in ascending order of time points of image capturing as shown in Fig. 10. Note that, in Fig. 10, a horizontal direction represents the direction of the sweep axis.

In Fig. 10, a captured image I(t-1) and the captured images It and I(t+1) included in three consecutive frames (t-1) to (t+1) are arranged in accordance with motion compensation parameters. Since the captured image I(t-1) has the smallest frame number among the captured images I(t-1) to I(t+1), the connection line calculation unit 66 first determines a connection line between the captured images I(t-1) and It.

Specifically, as shown in an upper portion of Fig. 10, the connection line calculation unit 66 determines a range from a position OX0(t-1, t) to a position OX1(t-1, t) in which the captured images I(t-1) and It which are adjacent to each other are overlapped with each other as a searching range and determines a connection line. As a result, a position S (t-1, t) having the minimum moving subject score value in the searching range is determined as a position of the connection line.

Next, the connection line calculation unit 66 determines a connection line between the captured images It and I(t+1) as shown in a middle portion of Fig. 10.

Here, in the region in which the captured images It and I(t+1) are overlapped with each other, a position of a left end of the region, that is, a left end of the captured image I(t+1) is located on a left side relative to the position S(t-1, t) of the determined connection line between the captured images I(t-1) and the It. Since a position of a connection line between the captured images It and I(t+1) should be located on a right side relative to the position S(t-1, t) of the determined connection line between the captured images I(t-1) and It, a region located on the left side relative to the position S(t-1, t) should be excepted from a searching range.

Therefore, the connection line calculation unit 66 determines the connection line in a region from the position S(t-1, t) to a position OX1(t, t+1) at a right edge of the captured image It serving as the searching region. As a result, a position S(t, t+1) having the minimum moving subject score value in the searching range is determined as a position of the connection line.

After connection lines which connect the captured images in the consecutive frames are determined as shown in Fig. 10, the panorama synthesis unit 68 in a succeeding stage connects effective regions which are included in the captured images and which are determined by the connection lines to each other so as to obtain a panorama image as shown in a lower portion in Fig. 10. Note that, in the lower portion in Fig. 10, hatched portions included in the captured images I(t-1) to I(t+1) represent the effective regions.

For example, the effective region included in the captured image It is a range from the position S(t-1, t) corresponding to the connection line between the captured images I(t-1) and It to the position S (t, t+1) corresponding to the connection line between the captured images It and I(t+1) in the direction of the sweep axis of the captured image It.

As described above, by successively determining the connection lines of the captured images between the captured images and the adjacent captured images, the effective regions of the captured images are successively determined.

Returning back to the explanation of the flowchart shown in Fig. 4, after determining the connection lines of the captured images, the connection line calculation unit 66 supplies connection line information representing the positions of the connection lines to the panorama synthesis unit 68, and the process proceeds from step S16 to step S17.

In step S17, the image projection unit 67 projects the captured images supplied from the cylindrical projection unit 62 in the panorama coordinate system using the motion compensation parameters supplied from the motion-compensation-parameter calculation unit 63 and supplies the captured images which have been projected to the panorama synthesis unit 68.

By this projection, the captured images are arranged in the panorama coordinate system so that identical subjects included in the captured images are substantially overlapped with one another. Note that the panorama coordinate system is a plane having an axis which extends perpendicular to the sweep axis and the sweep axis. For example, when the direction of the sweep axis is the same as a direction perpendicular to a vertical direction in an image capturing space obtained at a time when the images are captured, an axis perpendicular to the sweep axis extends in the vertical direction.

In step S18, the panorama synthesis unit 68 connects (synthesizes) the effective regions of the captured images which have been projected in the panorama coordinate system and which have been supplied from the image projection unit 67 using the connection linen information supplied from the connection line calculation unit 66 to one another so as to generate a panorama image.

Specifically, before connecting (synthesizing) the effective regions of the captured images to one another, in portions in the vicinity of edges of the effective regions, the panorama synthesis unit 68 performs weighting addition on the effective regions of the two captured images adjacent to each other so as to generate a panorama image.

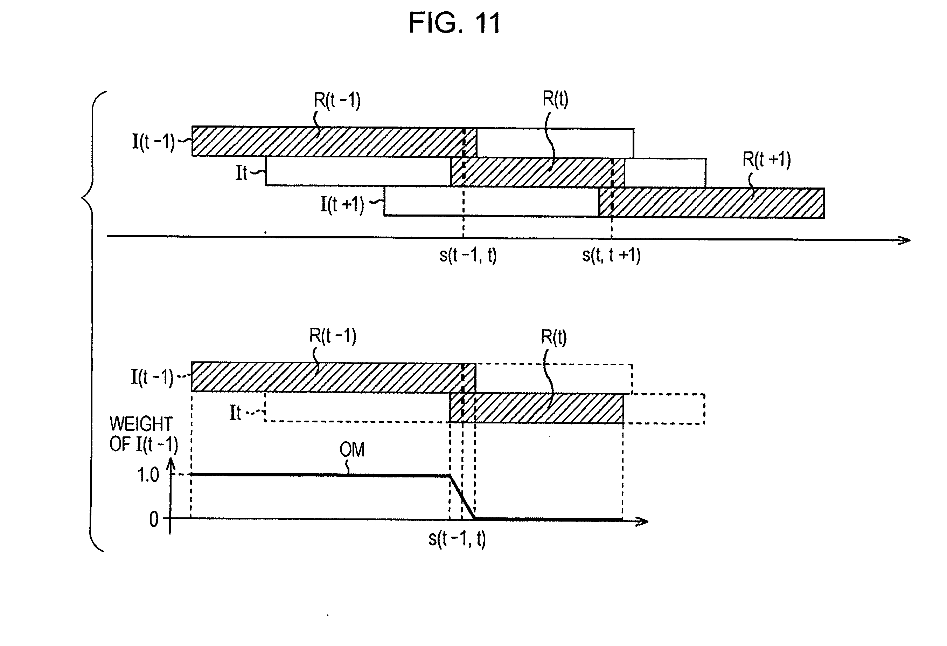

For example, as shown in Fig. 11, the effective regions of the captured images included in the consecutive frames are determined such that the edge portions thereof are overlapped with each other. Note that a horizontal direction denotes the direction of the sweep axis. In Fig. 11, the captured images I(t-1) to I(t+1) included in the three consecutive frames are arranged in the panorama coordinate system.

As shown in an upper portion of Fig. 11, in an effective region R(t-1) of the captured image I(t-1), a right end is located on a slightly right side relative to the position S(t-1, t) of the connection line between the captured images I(t-1) and It. Furthermore, in an effective region R(t) of the captured image It, a left end is located on a slightly left side relative to the position S(t-1, t) of the connection line between the captured images It and I(t-1). Accordingly, a portion in the effective region R(t-1) located in the vicinity of the right end and a portion of the effective region R(t) located in the vicinity of the left end are overlapped with each other.

Then, when the effective regions R(t-1) and R(t) are to be connected to each other, in a region from the left end position of the effective region R(t) to the right end position of the effective region R(t-1) in the sweep axis direction, weighting addition is performed using values of pixels included in the same portions of the effective regions R(t-1) and R(t).

Similarly, the effective regions R(t) and R(t+1) are overlapped with each other at a portion in the vicinity of the position S(t, t+1) corresponding to the connection line. When the effective regions R(t) and R(t+1) are to be connected to each other, weighting addition is performed using pixel values on the overlapping portion.

In the weighting addition performed on the effective regions, weights of the weighting addition are changed depending on the positions arranged in the sweep axis direction. In a lower portion of Fig. 11, a polygonal curve OM represents degrees of weights by which pixels in the captured image I(t-1) (effective region R(t-1)) are multiplied.

That is, in the effective region R(t-1) shown in Fig. 11, a degree of a weight in a range from a left end in Fig. 11 to a left end of the effective region R(t) is "1". This is because the effective region R(t-1) is used as a panorama image as it is in the range in the effective region R(t-1) from the left end of the effective region R(t-1) to the left end of the effective region R(t).

Furthermore, a degree of a weight of the effective region R(t-1) in a range from the left end of the effective region R(t) to the right end of the effective region R(t-1) becomes smaller on a right side in Fig. 11, and a degree of a weight is "0" in a position corresponding to the right end of the effective region R(t-1).

In the portion in which the effective regions R(t-1) and R(t) are overlapped with each other, a rate of a contribution to a generation of the panorama image by the effective region R(t-1) becomes higher on the left end of the effective region R(t) relative to the position S(t-1). On the other hand, a rate of a contribution to a generation of the panorama image by the effective region R(t) becomes higher on the left end of the effective region R(t-1) relative to the position S(t-1, t).

Furthermore, in a portion in the captured image I(t-1) shown in Fig. 11 which is located on a right side relative to the right end of the effective region R(t-1), the captured image is not used for the generation of the panorama image, and accordingly, a degree of a weight is "0".

As described above, in portions in the vicinity of ends of the effective regions, a panorama image is generated using two effective regions adjacent to each other whereas in other portions, a single effective region is used as the panorama image without change. Accordingly, a blur of the panorama image caused by overlapping of the captured images is prevented from being generated.

Furthermore, the end portions of the effective regions are subjected to the weighting addition by changing a synthesis rate depending on positions, that is, by escalating the weight. By this, a high-quality panorama image is obtained. Specifically, even when positions of identical subjects are displaced from each other or colors of pixels are different from each other in a portion in which two effective regions to be connected to each other are overlapped with each other, a smoothing effect is attained through the weighting addition. By this, lack of a part of a subject or color unevenness of a panorama image is prevented from being generated. Accordingly, a more natural panorama image is obtained.

The panorama synthesis unit 68 connects the effective regions of the captured images which are adjacent to each other to each other in the panorama coordinate system as described above so as to generate a single panorama image. Note that trimming may be performed so that a region corresponding to a portion of a single image including effective regions connected to each other may serve as a panorama image.

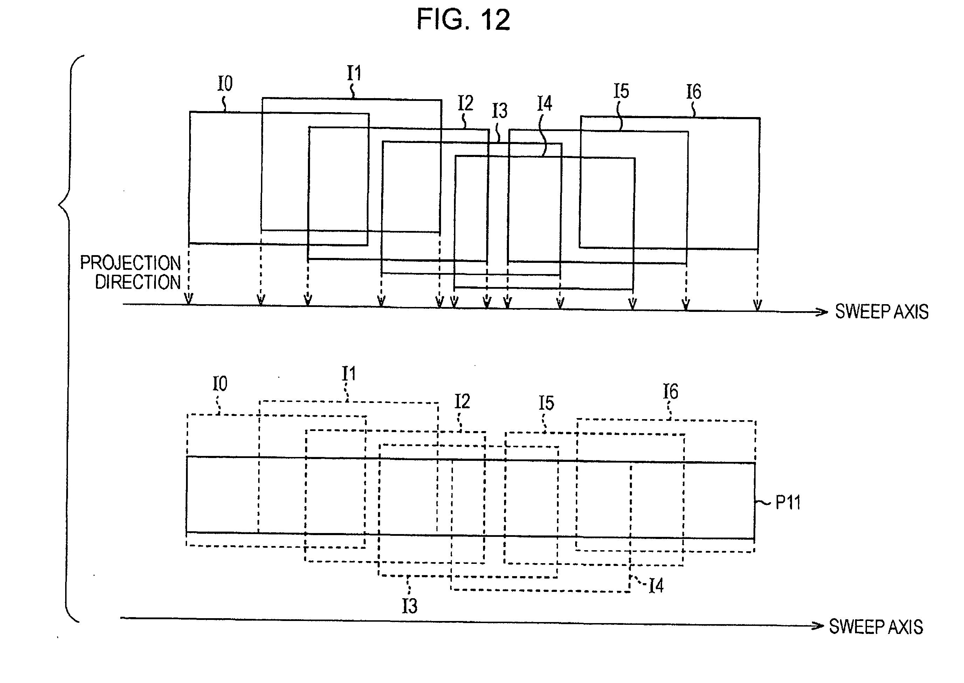

For example, when the user holds the image pickup apparatus 11 and captures an image while sweeping the image pickup apparatus 11, as shown in an upper portion in Fig. 12, positions of captured images I0 to I6 which are consecutively captured may be varied in the panorama coordinate system in a vertical direction in Fig. 12. Note that, in Fig. 12, a horizontal direction represents the direction of the sweep axis and the vertical direction represents a direction of an axis extending perpendicular to the sweep axis in the panorama coordinate system.

In the example shown in Fig. 12, the sweep axis extends in parallel to a longitudinal direction of the captured images. Furthermore, in Fig. 12, vertical positions, that is, positions in a direction perpendicular to the sweep axis, of the captured images I0 to I6 are different from one another.

Therefore, an image obtained by connecting the effective regions of the captured images with each other does not have a rectangular shape. Accordingly, as shown in a lower portion in Fig. 12, the panorama synthesis unit 68 extracts a rectangular region P11 which is the largest rectangle inscribed in an entire region of the image obtained by connecting the effective regions of the captured images I0 to I6 so as to obtain a panorama image. Here, long sides of the rectangular region P11 extend in parallel to the sweep axis. In this way, trimming is performed to thereby obtain a rectangular panorama image.

Note that, in the case of the example shown in Fig. 12, subject information of the regions included in the captured images is projected onto the sweep axis in a direction perpendicular to the sweep axis and in parallel to a direction of short sides of the captured images as represented by dotted lines in the upper portion in Fig. 12. Accordingly, connection lines also extend in a direction parallel to the direction of the short sides of the captured images.

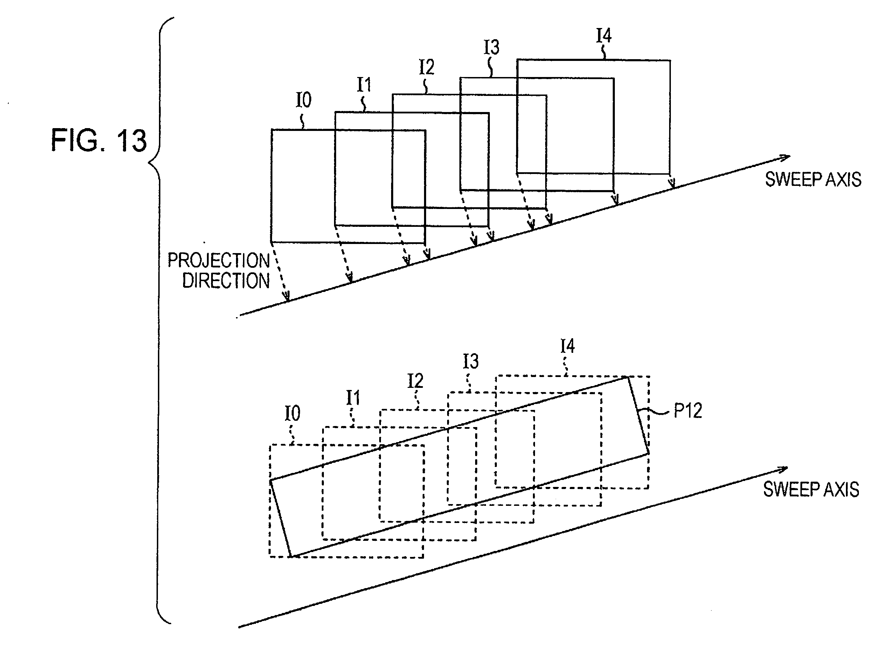

Furthermore, in a case where the user holds the image pickup apparatus 11 and sweeps the image pickup apparatus 11, a direction of the sweep of the image pickup apparatus 11 may correspond to a direction diagonally to the vertical direction in the image capturing space. In this case, for example, as shown in an upper portion in Fig. 13, the direction of the sweep axis may correspond to a direction diagonally to the longitudinal direction of the captured images.

In Fig. 13, the sweep axis extends to an upper right direction, and a direction perpendicular to the sweep axis corresponds to a direction of an axis perpendicular to the sweep axis in the panorama coordinate system. In the example shown in Fig. 13, captured images I0 to I4 which are consecutively captured are arranged in the upper right direction and a direction parallel to the direction in which the captured images are arranged corresponds to the direction of the sweep axis. In this case, the sweep axis does not extend in parallel to a longitudinal direction of the captured images.

In this case, the panorama synthesis unit 68 extracts a rectangular region P12 which is the largest rectangle inscribed in an entire region of the image obtained by connecting the effective regions of the captured images I0 to I4 as shown in a lower portion in Fig. 13 so as to obtain a panorama image. Here, long sides of the rectangular region P12 extend in parallel to the sweep axis.

In the example of Fig. 13, since the sweep axis diagonally extends, the larger rectangular region corresponding to the panorama image is obtained when compared with the case where the sweep axis extends in the horizontal direction.

Note that, in the case of the example shown in Fig. 13, subject information of regions included in the captured images is projected onto the sweep axis in a direction perpendicular to the sweep axis and diagonally to a direction of short sides of the captured images as represented by dotted lines shown in the upper portion in Fig. 12. Accordingly, connection lines also extend diagonally to the direction of the short sides of the captured images.

Furthermore, although the description is made in which the direction of the sweep axis is determined in advance, the direction of the sweep axis may be selected from among a plurality of directions before or after the images are captured by operating the operation input unit 33 by the user.

After the panorama image is generated as described above, the panorama synthesis unit 68 outputs the generated panorama image, and the process of generating a panorama image is terminated.

For example, the panorama image output from the panorama synthesis unit 68 is encoded by the encoding/decoding unit 27 and recorded in the memory 28 or supplied through the D/A conversion circuit 29 and the video encoder 30 to the display unit 31 to be displayed.

As described above, the image pickup apparatus 11 calculates subject information representing a movement of a moving subject using captured images and determines connection lines by projecting the subject information on a sweep axis. Then, the image pickup apparatus 11 connects the captured images with each other at the determined connection lines so as to generate a panorama image.

Since the image pickup apparatus 11 determines connection lines by projecting the subject information on the sweep axis, a high-quality panorama image is obtained with low calculation cost.

That is, in the related art, as described with reference to Fig. 1, a problem in which a moving subject is blurred or a moving subject is divided is solved by determining connection lines (joint lines SL) through the two-dimensional searching, and a panorama image having higher quality is obtained. However, when the two-dimensional searching is used, the calculation cost is high and large recording capacity of a memory is used for the two-dimensional searching.

On the other hand, since the image pickup apparatus 11 projects two-dimensional information including subject information of regions on an one-dimensional axis, i.e., a sweep axis, connection lines are determined through one-dimensional searching. Accordingly, a blur or a division of a moving subject is prevented, and a panorama image of higher quality is obtained with low calculation cost. In addition, recording capacity of a memory is reduced.

Explanation of Another Example of Subject Information

Note that, in the foregoing examples, the case where cost values serving as subject information correspond to absolute values of differences between a motion vector of an entire captured image and motion vectors of blocks has been described. However, any information may serve as subject information as long as the information relates to a subject included in captured images.

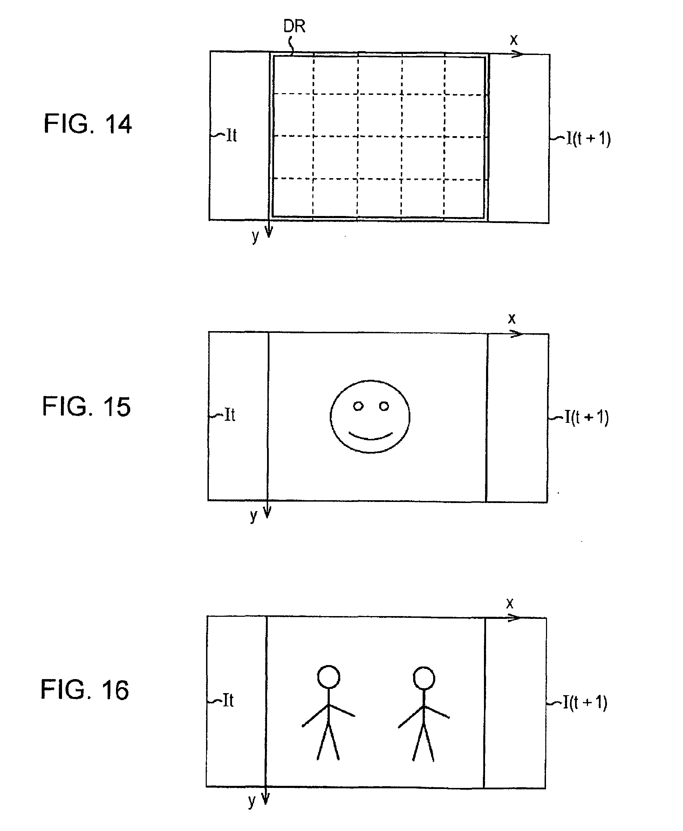

For example, as shown in Fig. 14, among pixels included in an overlapping region DR corresponding to a region in which the captured images It and I(t+1) are overlapped with each other, subject information may correspond to absolute values of differences between values of pixels included in the captured image It and values of pixels which are included in the captured image I(t+1) and which are located in positions corresponding to the pixels of the captured image It. Note that, in Fig. 14, portions corresponding to the portions shown in Fig. 7 are denoted by reference characters the same as those shown in Fig. 7, and therefore, descriptions thereof are omitted where appropriate. Furthermore, in Fig. 14, the captured images It and I(t+1) are arranged in accordance with motion compensation parameters.

In this case, the moving subject detector 64 calculates a cost value $cost(x, y)$ of a pixel in a position $(x, y)$ of the captured image It in the xy coordinate system in accordance with Expression (2) below. Note that, in Fig. 14, a horizontal direction corresponds to an x direction whereas a vertical direction corresponds to a y direction. Furthermore, in the overlapping region DR shown in Fig. 14, an upper left corner is determined as a reference position of an xy coordinate system, and the x direction serves as the direction of the sweep axis.

$$\text{cost value } cost(x, y) = |It(x, y) - It+1(x, y)| \quad (2)$$

Note that, in Expression (2), $It(x, y)$ and $It+1(x, y)$ represent a pixel value of the captured image It at a coordinate $(x, y)$ and a pixel value of the captured image I(t+1) at a coordinate $(x, y)$.

When such cost values are used as subject information, in a region in which absolute values of differences between pixel values of captured images are small, it is determined that a position displacement of a subject caused by connection is small. When the absolute values of differences between pixel values are used as the cost values, in addition to a position displacement caused by a movement of a moving subject, parallax and a displacement of positions of the subject caused by lack of accuracy of motion compensation performed on movement of the image pickup apparatus 11 are also reflected to the cost values, which is an advantage.

Furthermore, as shown in Fig. 15, cost values using face likeness as an index may be obtained as subject information through a detection of a human face. Note that, in Fig. 15, captured images It and I(t+1) are arranged in accordance with the motion compensation parameters.

The moving subject detector 64 detects a human face in an overlapping region in which the captured images It and I(t+1) are overlapped with each other. As a result, a region of a predetermined size (hereinafter referred to as a "face region") which is included in the captured image It and which is expected to include a human face and a point representing a degree of human-face-region-likeness of the face region are obtained. The point becomes higher as the face likeness in the face region is high.

Then, the moving subject detector 64 obtains cost values for individual positions of the overlapping region of the captured image It. Specifically, when a certain position among the positions is included in the face region, a value of a point of the face region is determined as a cost value in the position whereas when the certain position is not included in the face region, the cost value of the position is equal to 0.

The moving subject detector 64 detects a human face by performing a similar process on the region in which the captured images I(t+1) and It are overlapped with each other so as to obtain cost values in positions included in the captured image I(t+1). Furthermore, the moving subject detector 64 adds the obtained cost values in the positions in the overlapping region included in the captured image It to the cost values in the positions in the captured image I(t+1) which are overlapped with the positions in the overlapping region in the captured image It and determines resultant values as final cost values in the positions in the overlapping region included in the captured image It.

In the example shown in Fig. 15, since the human face is included substantially at the center of the overlapping region, cost values in positions around the center of the overlapping region are supposed to be high. In many cases, captured images include images of persons serving as moving subjects. Therefore, a method for determining cost values,

as subject information, using a human face as an index is effective when a face portion rather than a limb portion or a trunk portion of a person is prevented from being divided when the captured images are to be connected.

Furthermore, as shown in Fig. 16, cost values may be obtained as subject information using person likeness as an index through person detection. Note that, in Fig. 16, captured images It and I(t+1) are arranged in accordance with motion compensation parameters.

The moving subject detector 64 detects a person in an overlapping region of the captured image It in which the captured images It and I(t+1) are overlapped with each other. As a result, a region of the captured image It which has a predetermined size and which is expected to include a person (hereinafter referred to as a "person region") and a point representing a degree of person-region likeness of the person region are obtained. The point becomes higher as a degree of person likeness of the person region becomes high.

Then, the moving subject detector 64 obtains cost values of positions included in the overlapping region in the captured image It. That is, when a certain position among the positions is included in the person region, a value of a point of the person region is determined as a cost value in the position whereas when the position is not included in the person region, a cost value in the position is equal to 0.

The moving subject detector 64 detects a person by performing a similar process on the region of the captured image I(t+1) which is overlapped with the captured image It so as to obtain cost values of positions included in the captured image I(t+1). Furthermore, the moving subject detector 64 adds the obtained cost values in the positions of the overlapping region included in the captured image It to the cost values in the positions of the captured image I(t+1) which are overlapped with the positions of the overlapping region included in the captured image It and determines resultant values as final cost values in the positions of the overlapping region included in the captured image It.

The example shown in Fig. 16 include persons on right and left sides in the overlapping region relative to the center thereof. Therefore, cost values in positions slightly on the right and left sides in the overlapping region relative to the center thereof are supposed to be high. Here, the method for determining cost values as subject information using an image of an entire person as an index is effective when the image of the entire person is prevented from being divided by a connection line when the captured images are connected.

Furthermore, some types of cost value described with reference to Fig. 7 and Figs. 14 to 16 may be combined with one another so as to be used as subject information.

For example, sums of the cost values described with reference to Fig. 7 and the cost values described with reference to Fig. 15 may be used as cost values (subject information) in positions of a captured image. In this case, higher cost values may be set to regions corresponding to human faces.

Furthermore, for example, sums of the cost values described with reference to Fig. 7 and the cost values described with reference to Fig. 16 may be used as subject information, or sums of the cost values described with reference to Figs. 7, 15, and 16 may be used as subject information. In this case, the sums of the cost values are obtained for individual positions included in captured images and the obtained sums are used as subject information in the positions.

Explanation of Another Example of Connection Line Determination Order

Moreover, according to the foregoing description, the connection lines between the captured images are determined in ascending order of frame numbers. However, order of determination of connection lines is not limited to this. That is, the connection lines may be successively determined starting from a captured image included in a predetermined frame serving as a reference.

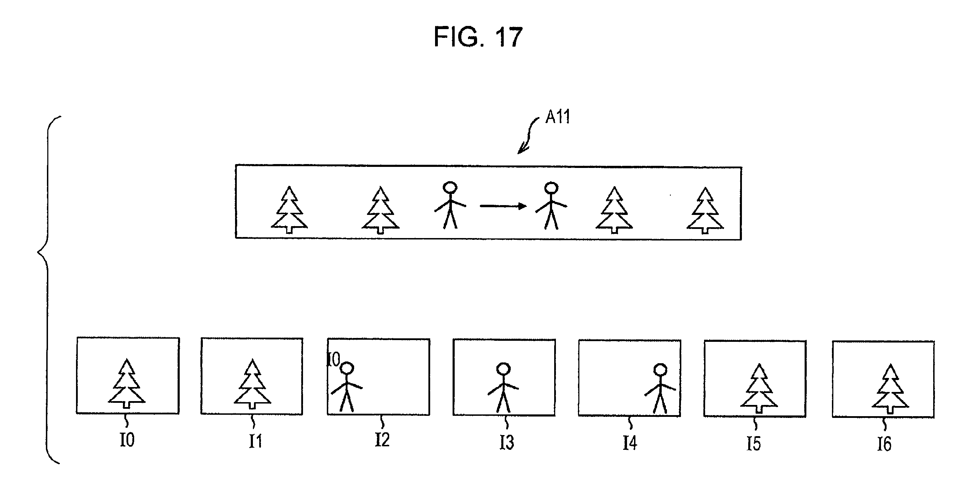

For example, in Fig. 17, it is assumed that a person corresponding to a moving subject moves in a region in an image capturing space to be subjected to image capturing from left to right as denoted by an arrow mark A11 shown in an upper portion of Fig. 17. Furthermore, it is assumed that, in this state, when a plurality of images are captured using the image pickup apparatus 11 while a sweep direction corresponds to a direction from left to right, seven captured images, i.e., captured images I0 to I6, are obtained as shown in a lower portion in Fig. 17.

In this example, an identical person is included as a moving subject in the captured images I2 to I4. At the time of image capturing, since the person serving as the moving subject moves from left to right, the person is displayed at a left end in the captured image I2 which corresponds to a frame 2 and which includes the person first. Furthermore, the person is displayed at the center of the next captured image I3, and the person is displayed at a right end in the further next captured image I4.

In this case, connection lines may be sequentially determined from the captured image I0 to the captured image I6 in this order. However, since the connection lines are determined so as to avoid a region corresponding to the moving subject, burden caused by the avoidance of a certain connection line from the region corresponding to the moving subject may affect a determination of the next connection line. Specifically, in a scene including consecutive frames including the moving subject, different panorama images may be obtained depending on order of a determination of the connection lines.

Therefore, the connection line calculation unit 66 may determine a captured image included in a frame which is preferentially used, determine the determined frame as a reference frame, and successively determine connection lines starting from the captured image included in the reference frame in ascending order and in descending order of frame numbers which are order in which the images are captured.

In this case, center closeness of the moving subject may be used as an index for determining a reference frame. Specifically, the moving subject detector 64 detects moving subjects from captured images included in consecutive two frames among the frames 0 to 6. The detection of the moving subjects is performed, as described with reference to Fig. 7, for example, by dividing an overlapping region of the captured images into blocks and obtaining differences between motion vectors of the blocks and a motion vector of the entire captured image. By this, presence or absence of a moving subject in regions included in the captured image is detected. For example, regions having absolute values of the obtained differences larger than a predetermined threshold value corresponds to regions including the moving subjects.

Next, the moving subject detector 64 obtains scores of the center closeness of the moving subjects for individual captured images in accordance with the results of the detection of the moving subjects. For example, the scores of the center closeness are determined depending on positions of the moving subjects in the captured images, and as the positions of the moving subjects are closer to the centers of the captured images, higher scores of the center closeness are obtained. Note that when a plurality of moving subjects are included in a single captured image, a sum of scores obtained for individual moving subjects is finally determined as a score of the center closeness.

Accordingly, as a moving subject is included in a captured image at a position closer to the center thereof, a higher score of the center closeness is obtained. Furthermore, as a larger number of moving subjects are included in a captured image, a higher score of the center closeness is obtained. Using the score of the center closeness, a captured image, among a plurality of captured images, in which a moving subject is located closest to the center of the image is specified.

In the example shown in Fig. 17, the highest score of the center closeness is obtained in the captured image 13. The scores of the center closeness of the individual frames obtained as described above are supplied along with the subject information from the moving subject detector 64 through the subject information projection unit 65 to the connection line calculation unit 66.

Then, the connection line calculation unit 66 determines connection lines of the captured images starting from a captured image of a reference frame corresponding to a frame having the highest score of the center closeness among the frames of the captured images.

Accordingly, in the example shown in Fig. 17, the frame 3 (captured image 13) is used as a reference, and first, a connection line between the captured images 13 and 14 is determined followed by a connection line between the captured images I4 and I5 and a connection line between the captured images 15 and 16 in ascending order. Thereafter, a connection line between the captured images 13 and 12, a connection line between the captured images I2 and I1, and a connection line between the captured images I1 and I0 are determined in descending order from the reference frame.

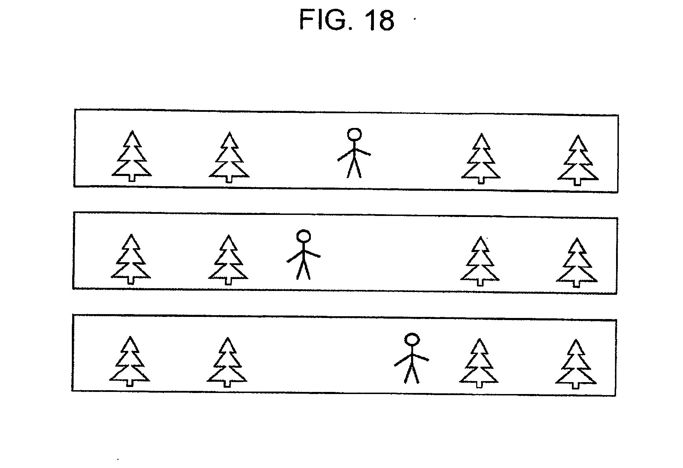

Then, as a result, as shown in an upper portion in Fig. 18, a panorama image showing the person serving as the moving subject at the center is obtained.

In many cases, images are captured while the image pickup apparatus 11 is swept so that a moving subject is located in the vicinity of the center of an entire region serving as an image capturing object. Therefore, among the consecutive frames including the moving subject, a frame substantially located in the middle of the frames is supposed to include the moving subject substantially at the center of an entire region serving as an image capturing object, that is, the moving subject is supposed to be located at the center of the captured image in the frame.

Accordingly, among the frames including the moving subject, the frame including the moving subject at the center of the captured image is used as a reference frame and positions of connection lines are successively determined starting from the reference frame. By this, a panorama image including the moving subject shown substantially at the center is obtained as shown in the upper portion in Fig. 18.

In general, a moving subject included in an image attracts eyes of the user who captures the image. Such an image including the moving object at the center thereof is referred to as a "good-looking image". Therefore, when connection lines of captured images are determined using center likeness of a moving subject as an index so that a panorama image including the moving subject located at the center thereof is generated, a better-looking panorama image is obtained.

Note that, in Fig. 17, when the connection lines of the captured images are successively determined starting from the captured image I2 using the frame of the captured image 12 which includes the moving subject at the left end thereof as a reference frame, a panorama image showing the person serving as the moving subject on the left side relative to the center thereof is obtained as shown in a middle portion in Fig. 18. Similarly, when the connection lines of the captured images are successively determined starting from the captured image 14 using the frame of the captured image 14 which includes the moving subject at the right end thereof as a reference frame, a panorama image displaying the person serving as the moving subject on the right side relative to the center thereof is obtained as shown in the lower portion in Fig. 18.

As described above, when positions of connection lines are successively determined starting from a captured image included in a special reference frame using a position of a moving subject at the time of image capturing as an index, a better-looking panorama image is obtained.

A series of the processes described above may be executed by hardware or software. For example, embodiments consistent with the present invention may include a non-transitory computer-readable medium tangibly embodied in a storage device encoded with instructions which, when executed on a processor, perform a method for generating a panoramic image. When the series of the processes is executed by software, programs included in the software are installed from a program recording medium to a computer incorporated in dedicated hardware or a general personal computer capable of executing various functions by installing various programs, for example.

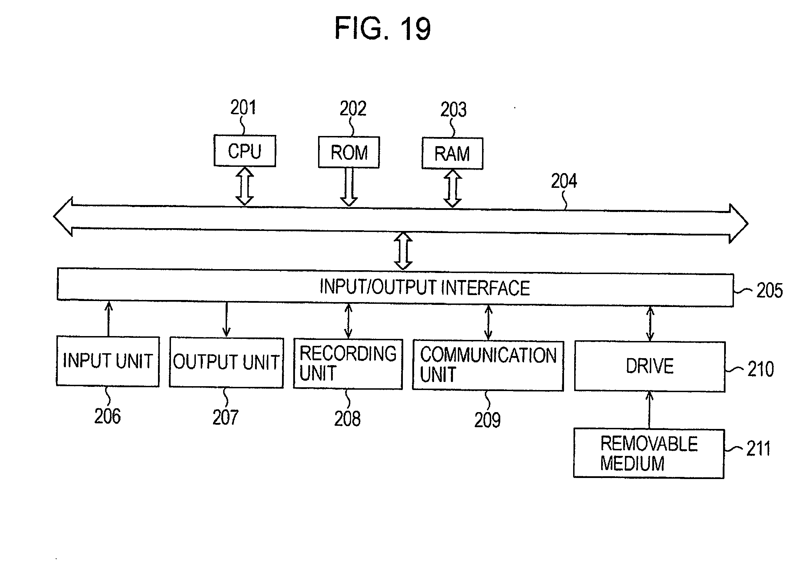

Fig. 19 is a block diagram illustrating an example of a configuration of hardware of a computer which may execute the instructions to perform a method for generating a panoramic image.

In the computer, a CPU (Central Processing Unit) 201, a ROM (Read Only Memory) 202, and a RAM (Random Access Memory) 203 are connected to one another through a bus 204.

An input/output interface 205 is further connected to the bus 204. An input unit 206 including a keyboard, a mouse, a microphone, and the like, an output unit 207 including a display, a speaker, and the like, a recording unit 208 including a hard disk, a nonvolatile memory, and the like, a communication unit 209 including a network interface and the like, and a drive 210 which drives a removable medium 211 (i.e., a computer-readable medium) including a magnetic disk, an optical disc, a magneto-optical disc, or a semiconductor memory are connected to the input/output interface 205.

In the computer configured as described above, the CPU 201 loads and executes instructions stored in the recording unit 208 through the input/output interface 205 and the bus 204 whereby the series of the processes described above is performed.

The instructions executed by the computer (CPU 201) may be supplied by being recorded in the removable medium 211 which is a package medium including a magnetic disk (such as a flexible disk), an optical disk (CD-ROM (Compact Disc-Read Only Memory), a DVD (Digital Versatile Disc), or the like) a magneto-optical disc, or a semiconductor memory or supplied through a wired or wireless transmission medium such as a local area network, the Internet, or a digital satellite broadcasting.

Then, the instructions are installed in the recording unit 208 through the input/output interface 205 by installing the removable medium 211 in the drive 210. Furthermore, the instructions are received by the communication unit 209 through the wired or wireless transmission medium and installed in the recording unit 208. Alternatively, the instructions may be installed in the ROM 202 or the recording unit 208 in advance.

Note that the instructions may be executed by the computer in time series in order described in this specification or may be executed in parallel or at an appropriate timing when reading is performed.

The present application contains subject matter related to that disclosed in Japanese Priority Patent Application JP 2009-247758 filed in the Japan Patent Office on October 28, 2009.

Although embodiments consistent with the present invention have been described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims. Indeed, the present invention is not limited to the foregoing embodiments and various modifications may be made without departing from the scope of the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An apparatus (11) for generating a panoramic image comprising:

    an image pickup unit (23) that receives a first image (It) and a second image (I (t+1)), the first image including first image data representing a moving subject, the second image including second image data representing the moving subject; and
    an image processing unit (26) operable to connect the first and second images to form a panoramic image, the image processing unit comprising:

        a motion-compensation parameter calculation unit (63) operable to calculate motion compensation parameters of the first and second images;

a moving subject detector (64) operable to calculate subject information relating to movement of the moving subject in regions of the first and second images using the motion compensation parameters and the first and second images, the regions of the first and second images being within a first overlapping region (DR) of the first and second images determined from the motion compensation parameters, the subject information comprising one of binary values representing whether the moving subject is included in positions of the first overlapping region (DR) and cost values calculated from motion vectors (LMV, GMV) for said regions of the first and second images representing the presence/absence of the moving subject and degrees of movement of the moving subject in said positions of the first overlapping region (DR);

a subject information projection unit (65) operable to project the subject information on a sweep axis using the motion compensation parameters and to calculate moving subject score values in individual positions on the sweep axis using the projected subject information;

a connection line calculation unit (66) operable to determine a searching range on the sweep axis corresponding to a second overlapping region of the first and second images and a position in which a minimum moving subject score value is obtained in the searching range as a position of a connection line (S) between the first and second images; and

a panorama synthesis unit (68) operable to connect effective regions (R(t), R (t+1) included in the first and second images to each other so as to obtain the panoramic image, the effective regions of the first and second images determined by the connection line.

2. The apparatus of claim 1, wherein the panorama synthesis unit (68) connects the effective regions (R (t), R (t+1)) of the first and second images (It, I(t+1)) by, in portions in the vicinity of edges of the effective regions, performing weighting addition on the effective regions of the first and second images.

3. The apparatus of claim 2, wherein weighting addition comprises assigning weights to pixels in the first and second images (It, (I (t+1)) based on the positions of the pixels with respect to the connection line (S).

4. The apparatus of claim 1, wherein to generate the panoramic image, the panorama synthesis unit (68) extracts a rectangular region (P11) from the panoramic image, the rectangular region being a largest rectangle inscribed in an entire region of the panoramic image.

5. The apparatus of claim 4, wherein the first and second images (It, I(t+1)) are captured using the sweep axis, and wherein the rectangular region (P11) includes a first side and a second side, the first and second sides being parallel to the sweep axis.

6. The apparatus of claim 1, wherein the first and second images (It, I(t+1)) are captured using the sweep axis, and wherein the connection line (S) extends in a direction perpendicular to the sweep axis.

7. A method for generating a panoramic image comprising:

receiving a first image and a second image (S 11), the first image including first image data representing a moving subject, the second image including second image data representing the moving subject;

calculating motion compensation parameters (S13) of the first and second images;

calculating subject information (S14) in regions of the first and second images using the motion compensation parameters and the first and second images, the regions of the first and second images being within a first overlapping region of the first and second images determined from the motion compensation parameters, the subject information comprising one of binary values representing whether the moving subject is included in positions of the first overlapping region and cost values calculated from motion vectors for said regions of the first and second images representing the presence/absence of the moving subject and degrees of movement of the moving subject in said positions of the first overlapping region;

projecting the subject information on a sweep axis (S15) using the motion compensation parameters and calculating moving subject score values in individual positions on the sweep axis using the projected subject information;

determining a searching range on the sweep axis corresponding to a second overlapping region of the first and second images and a position in which a minimum moving subject score value is obtained in the searching range as a position of a connection line between the first and second images;

connecting effective regions included in the first and second images to each other (S 18) so as to obtain the panoramic image, the effective regions of the first and second images being determined by the connection line.

8. The method of claim 7, wherein the first and second images are captured using a sweep axis, and wherein the connection line extends in a direction perpendicular to the sweep axis.

9. The method of claim 7, wherein the effective regions of the first and second images are connected by, in portions in the vicinity of edges of the effective regions, performing weighting addition on the effective regions of the first and second images.

10. The method of claim 9, wherein performing weighting addition comprises assigning weights to pixels in the first and second images based on the positions of the pixels with respect to the connection line.

11. The method of claim 7, wherein generating the panoramic image further comprises extracting a rectangular region from the panoramic image, the rectangular region being a largest rectangle inscribed in an entire region of the panoramic image.

12. The method of claim 11, wherein the first and second images are captured using the sweep axis, and wherein the rectangular region includes a first side and a second side, the first and second sides being parallel to the sweep axis.

13. A computer program product containing computer readable instructions which, when loaded onto a computer, configure the computer to perform a method according to any one of claims 7-12.

**Patentansprüche**

1. Vorrichtung (11) zum Erzeugen eines Panoramabildes, umfassend:

- eine Bildaufnahmeeinheit (23), die ein erstes Bild (It) und ein zweites Bild (I(t+1)) aufnimmt, wobei das erste Bild erste Bilddaten enthält, die ein sich bewegendes Objekt darstellen, und wobei das zweite Bild zweite Bilddaten enthält, die das sich bewegende Objekt darstellen,
- und eine Bildverarbeitungseinheit (26), betriebsfähig das erste und zweite Bild zur Bildung eines Panoramabildes zu verbinden, wobei die Bildverarbeitungseinheit umfasst:
- eine Bewegungskompensationsparameter-Recheneinheit (63), die betreibbar ist, um Bewegungskompensationsparameter des ersten und zweiten Bilds zu berechnen,
- einen Bewegungsobjekt-Detektor (64), der betreibbar ist, um eine Objektinformation bezüglich einer Bewegung des sich bewegenden Objekts in Bereichen des ersten und zweiten Bilds unter Heranziehung der Bewegungskompensationsparameter und des ersten und zweiten Bilds zu berechnen, wobei die Bereiche des ersten und zweiten Bilds sich innerhalb eines ersten Überlappungsbereichs (DR) des ersten und zweiten Bilds befinden, der aus den Bewegungskompensationsparametern bestimmt ist, wobei die Objektinformation einen Wert von Binärwerten, welche bedeuten, ob das sich bewegende Objekt in Positionen des ersten Überlappungsbereichs (DR) enthalten ist, und aus Bewegungsvektoren (LMV, GMV) für die betreffenden Bereiche des ersten und zweiten Bilds berechnete Kostenwerte umfasst, die das Vorhandensein/Fehlen des sich bewegenden Objekts und Ausmaße der Bewegung des sich bewegenden Objekts in den Positionen des ersten Überlappungsbereichs (DR) darstellen,
- eine Objektinformations-Projektionseinheit (65), die betreibbar ist, um die Objektinformation auf einer Durchlaufachse unter Heranziehung der Bewegungskompensationsparameter zu projizieren und um Bewegungsobjekt-Trefferwerte in individuellen Positionen auf der Durchlaufachse unter Heranziehung der projizierten Objektinformation zu berechnen,
- eine Verbindungslinien-Recheneinheit (66), die betreibbar ist, um einen Suchbereich auf der Durchlaufachse entsprechend einem zweiten Überlappungsbereich des ersten und zweiten Bilds und eine Position zu bestimmen, in der ein minimaler Bewegungsobjekt-Trefferwert in dem Suchbereich als eine Position einer Verbindungslinie (S) zwischen dem ersten und zweiten Bild erhalten wird,
- und eine Panorama-Zusammensetzungseinheit (68), die betreibbar ist, um effektive Bereiche (R(t), R(t+1)), die in dem ersten und zweiten Bild enthalten sind, miteinander zu verbinden, um das Panoramabild zu erhalten, wobei die effektiven Bereiche des ersten und zweiten Bilds durch die Verbindungslinie bestimmt sind.

2. Vorrichtung nach Anspruch 1, wobei die Panorama-Zusammensetzungseinheit (68) die effektiven Bereiche (R(t), R(t+1)) des ersten und zweiten Bilds (It, I(t+1)) dadurch verbindet, dass in Teilen in der Nähe von Rändern der effektiven Bereiche eine Gewichtungsaddition bezüglich der effektiven Bereiche der ersten und zweiten Bilder ausgeführt wird.

**3.** Vorrichtung nach Anspruch 2, wobei die Gewichtungsaddition eine Zuordnung von Gewichten zu Pixeln in dem ersten und zweiten Bild (It, I(t+1)) auf der Grundlage der Positionen der Pixel in Bezug auf die Verbindungslinie (S) umfasst.

**4.** Vorrichtung nach Anspruch 1, wobei zur Erzeugung des Panoramabildes die Panorama-Zusammensetzungseinheit (68) einen rechteckförmigen Bereich (P11) aus dem Panoramabild extrahiert, wobei der rechteckförmige Bereich ein größtes Rechteck ist, welches in einem Gesamtbereich des Panoramabildes eingeschrieben ist.

**5.** Vorrichtung nach Anspruch 4, wobei das erste und zweite Bild (It, I(t+1) unter Heranziehung der Durchlaufachse erfasst sind und wobei der rechteckförmige Bereich (P11) eine erste Seite und eine zweite Seite enthält, wobei die ersten und zweiten Seiten parallel zu der Durchlaufachse verlaufen.

**6.** Vorrichtung nach Anspruch 1, wobei das erste und zweite Bild (It, I(t+1)) unter Heranziehung der Durchlaufachse erfasst sind und wobei die Verbindungslinie (S) in einer Richtung rechtwinklig zu der Durchlaufachse verläuft.

**7.** Verfahren zum Erzeugen eines Panoramabildes, umfassend:

- Aufnehmen eines ersten Bildes und eines zweiten Bildes (S 11), wobei das erste Bild erste Bilddaten enthält, die ein sich bewegendes Objekt darstellen, und wobei das zweite Bild zweite Bilddaten enthält, die das sich bewegende Objekt darstellen,
- Berechnen von Bewegungskompensationsparametern (S13) des ersten und zweiten Bilds,
- Berechnen einer Objektinförmation (S14) in Bereichen des ersten und zweiten Bilds unter Heranziehung der Bewegungskompensationsparameter und des ersten und zweiten Bilds, wobei die Bereiche des ersten und zweiten Bilds sich innerhalb eines ersten Überlappungsbereichs des ersten und zweiten Bilds befinden, der aus den Bewegungskompensationsparametern bestimmt wird, wobei die Objektinformation einen Wert von Binärwerten, die bedeuten, ob das sich bewegende Objekt in Positionen des ersten Überlappungsbereichs enthalten ist, und aus Bewegungsvektoren für die betreffenden Bereiche des ersten und zweiten Bilds berechnete Kostenwerte umfasst, die das Vorhandensein/Fehlen des sich bewegenden Objektes und Ausmaße der Bewegung des sich bewegenden Objekts in den betreffenden Positionen des ersten Überlappungsbereichs darstellen,
- Projizieren der Objektinformation auf eine Durchlaufachse (S15) unter Heranziehung der Bewegungskompensationsparameter und Berechnen von Bewegungsobjekt-Trefferwerten in individuellen Positionen auf der Durchlaufachse unter Heranziehung der projizierten Objektinformation,
- Bestimmen eines Suchbereiches auf der Durchlaufachse entsprechend einem zweiten Überlappungsbereich des ersten und zweiten Bilds und einer Position, in der ein minimaler Bewegungsobjekt-Trefferwert in dem Suchbereich als eine Position einer Verbindungslinie zwischen dem ersten und zweiten Bild erhalten wird,
- und Verbinden von in dem ersten und zweiten Bild enthaltenen effektiven Bereichen miteinander (S 18), um das Panoramabild zu erhalten, wobei die effektiven Bereiche des ersten und zweiten Bilds durch die Verbindungslinie bestimmt werden.

**8.** Verfahren nach Anspruch 7, wobei das erste und zweite Bild unter Heranziehung einer Durchlaufachse erfasst werden und wobei die Verbindungslinie in einer Richtung rechtwinklig zu der Durchlaufachse verläuft.

**9.** Verfahren nach Anspruch 7, wobei die effektiven Bereiche des ersten und zweiten Bilds dadurch verbunden werden, dass in Teilen in der Nähe von Rändern der effektiven Bereiche eine Gewichtungsaddition bezüglich der effektiven Bereiche des ersten und zweiten Bilds ausgeführt wird.

**10.** Verfahren nach Anspruch 9, wobei das Ausführen der Gewichtungsaddition ein Zuordnen von Gewichten zu Pixeln in dem ersten und zweiten Bild auf der Grundlage der Positionen der Pixel in Bezug auf die Verbindungslinie umfasst.

**11.** Verfahren nach Anspruch 7, wobei die Erzeugung des Panoramabildes ferner ein Extrahieren eines rechteckförmigen Bereiches aus dem Panoramabild umfasst, wobei der rechteckförmige Bereich ein größtes Rechteck ist, welches in einem Gesamtbereich des Panoramabildes eingeschrieben ist.

**12.** Verfahren nach Anspruch 11, wobei das erste und zweite Bild unter Heranziehung der Durchlaufachse erfasst werden und wobei der rechteckförmige Bereich eine erste Seite und eine zweite Seite enthält, wobei die ersten und zweiten Seiten parallel zu der Durchlaufachse verlaufen.

**EP 2 330 812 B1**

13. Computerprogrammprodukt, welches durch einen Computer lesbare Befehle enthält, die dann, wenn sie in einen Computer geladen sind, den Computer konfigurieren, um ein Verfahren nach einem der Ansprüche 7 bis 12 auszuführen.

**Revendications**

1. Appareil (11) pour générer une image panoramique comprenant :

une unité de prise d'image (23) qui reçoit une première image (It) et une deuxième image (I(t+1)), la première image comprenant des premières données d'image représentant un sujet mobile, la deuxième image comprenant des deuxièmes données d'image représentant le sujet mobile ; et
une unité de traitement d'image (26) pouvant être utilisée pour relier les première et deuxième images pour former une image panoramique, l'unité de traitement d'image comprenant :

une unité de calcul de paramètre de compensation de mouvement (63) pouvant être utilisée pour calculer des paramètres de compensation de mouvement des première et deuxième images ;
un détecteur de sujet mobile (64) pouvant être utilisé pour calculer des informations de sujet concernant le mouvement du sujet mobile dans des régions des première et deuxième images en utilisant les paramètres de compensation de mouvement et les première et deuxième images, les régions des première et deuxième images étant à l'intérieur d'une première région de superposition (DR) des première et deuxième images déterminée à partir des paramètres de compensation de mouvement, les informations de sujet comprenant l'une de valeurs binaires représentant si le sujet mobile est inclus à des positions de la première région de superposition (DR) et de valeurs de coût calculées à partir de vecteurs de mouvement (LMV, GMV) pour lesdites régions des première et deuxième images représentant la présence/l'absence du sujet mobile et les degrés de mouvement du sujet mobile auxdites positions de la première région de superposition (DR) ;
une unité de projection d'informations de sujet (65) pouvant être utilisée pour projeter les informations de sujet sur un axe de balayage en utilisant les paramètres de compensation de mouvement et pour calculer des valeurs de score de sujet mobile à des positions individuelles sur l'axe de balayage en utilisant les informations de sujet projetées ;
une unité de calcul de ligne de connexion (66) pouvant être utilisée pour déterminer une plage de recherche sur l'axe de balayage correspondant à une deuxième région de superposition des première et deuxième images et une position à laquelle une valeur de score de sujet mobile minimum est obtenue dans la plage de recherche en tant que position d'une ligne de connexion (S) entre les première et deuxième images ; et
une unité de synthèse de panorama (68) pouvant être utilisée pour connecter des régions effectives (R(t), R(t+1) incluses dans les première et deuxième images les unes aux autres de manière à obtenir l'image panoramique, les régions effectives des première et deuxième images étant déterminées par la ligne de connexion.

2. Appareil selon la revendication 1, dans lequel l'unité de synthèse de panorama (68) connecte les régions effectives (R(t), R(t+1)) des première et deuxième images (It, I(t+1)) en, dans des parties dans le voisinage des bords des régions effectives, effectuant une addition à pondération sur les régions effectives des première et deuxième images.

3. Appareil selon la revendication 2, dans lequel l'addition à pondération comprend l'attribution de coefficients de pondération à des pixels dans les première et deuxième images (It, I(t+1)) sur la base des positions des pixels par rapport à la ligne de connexion (S).

4. Appareil selon la revendication 1, dans lequel, pour générer l'image panoramique, l'unité de synthèse de panorama (68) extrait une région rectangulaire (P11) de l'image panoramique, la région rectangulaire étant un rectangle le plus grand inscrit dans une région entière de l'image panoramique.

5. Appareil selon la revendication 4, dans lequel les première et deuxième images (It, I(t+1)) sont capturées en utilisant l'axe de balayage, et dans lequel la région rectangulaire (P11) comprend un premier côté et un deuxième côté, les premier et deuxième côtés étant parallèles à l'axe de balayage.

6. Appareil selon la revendication 1, dans lequel les première et deuxième images (It, I(t+1)) sont capturées en utilisant l'axe de balayage, et dans lequel la ligne de connexion (S) s'étend dans une direction perpendiculaire à l'axe de balayage.

**7.** Procédé pour générer une image panoramique comprenant :

la réception d'une première image et d'une deuxième image (S11), la première image comprenant des premières données d'image représentant un sujet mobile, la deuxième image comprenant des deuxièmes données d'image représentant le sujet mobile ;

le calcul de paramètres de compensation de mouvement (S13) des première et deuxième images ;

le calcul d'informations de sujet (S14) dans des régions des première et deuxième images en utilisant les paramètres de compensation de mouvement et les première et deuxième images, les régions des première et deuxième images étant à l'intérieur d'une première région de superposition des première et deuxième images déterminée à partir des paramètres de compensation de mouvement, les informations de sujet comprenant l'une de valeurs binaires représentant si le sujet mobile est inclus à des positions de la première région de superposition et de valeurs de coût calculées à partir de vecteurs de mouvement pour lesdites régions des première et deuxième images représentant la présence/l'absence du sujet mobile et les degrés de mouvement du sujet mobile auxdites positions de la première région de superposition ;

la projection des informations de sujet sur un axe de balayage (S15) en utilisant les paramètres de compensation de mouvement et le calcul de valeurs de score de sujet mobile à des positions individuelles sur l'axe de balayage en utilisant les informations de sujet projetées ;

la détermination d'une plage de recherche sur l'axe de balayage correspondant à une deuxième région de superposition des première et deuxième images et d'une position à laquelle une valeur de score de sujet mobile minimum est obtenue dans la plage de recherche en tant que position d'une ligne de connexion entre les première et deuxième images ;

la connexion de régions effectives incluses dans les première et deuxième images les unes aux autres (S18) de manière à obtenir l'image panoramique, les régions effectives des première et deuxième images étant déterminées par la ligne de connexion.

**8.** Procédé selon la revendication 7, dans lequel les première et deuxième images sont capturées en utilisant un axe de balayage, et dans lequel la ligne de connexion s'étend dans une direction perpendiculaire à l'axe de balayage.

**9.** Procédé selon la revendication 7, dans lequel les régions effectives des première et deuxième images sont connectées en, dans des parties dans le voisinage des bords des régions effectives, effectuant une addition à pondération sur les régions effectives des première et deuxième images.

**10.** Procédé selon la revendication 9, dans lequel l'exécution de l'addition à pondération comprend l'attribution de coefficients de pondération à des pixels dans les première et deuxième images sur la base des positions des pixels par rapport à la ligne de connexion.

**11.** Procédé selon la revendication 7, dans lequel la génération de l'image panoramique comprend en outre l'extraction d'une région rectangulaire de l'image panoramique, la région rectangulaire étant un rectangle le plus grand inscrit dans une région entière de l'image panoramique.

**12.** Procédé selon la revendication 11, dans lequel les première et deuxième images sont capturées en utilisant l'axe de balayage, et dans lequel la région rectangulaire comprend un premier côté et un deuxième côté, les premier et deuxième côtés étant parallèles à l'axe de balayage.

**13.** Produit programme d'ordinateur contenant des instructions pouvant être lues par un ordinateur qui, lorsqu'elles sont chargées sur un ordinateur, configurent l'ordinateur pour effectuer un procédé selon l'une quelconque des revendications 7 à 12.

# FIG. 1

FIG. 2

EP 2 330 812 B1

# FIG. 3

26

- 61 CAPTURED IMAGE STORING UNIT
- 62 CYLINDRICAL PROJECTION UNIT
- 63 MOTION-COMPENSATION-PARAMETER CALCULATION UNIT
- 64 MOVING SUBJECT DETECTOR
- 65 SUBJECT INFORMATION PROJECTION UNIT
- 66 CONNECTION LINE CALCULATION UNIT
- 67 IMAGE PROJECTION UNIT
- 68 PANORAMA SYNTHESIS UNIT

23

# FIG. 4

```
( START OF PANORAMA-IMAGE GENERATION PROCESS )
                        │
                        ▼
        ┌──────────────────────────────┐  ⌐S11
        │        CAPTURE SUBJECT        │
        └──────────────────────────────┘
                        │
                        ▼
┌──────────────────────────────────────────┐  ⌐S12
│ PROJECT CAPTURED IMAGES TO CYLINDRICAL AREA│
└──────────────────────────────────────────┘
                        │
                        ▼
   ┌────────────────────────────────────────┐  ⌐S13
   │ CALCULATE MOTION COMPENSATION PARAMETERS │
   └────────────────────────────────────────┘
                        │
                        ▼
      ┌─────────────────────────────────────┐  ⌐S14
      │    CALCULATE SUBJECT INFORMATION OF  │
      │      REGIONS OF CAPTURED IMAGE       │
      └─────────────────────────────────────┘
                        │
                        ▼
   ┌────────────────────────────────────────┐  ⌐S15
   │ PROJECT SUBJECT INFORMATION ON SWEEP AXIS│
   └────────────────────────────────────────┘
                        │
                        ▼
        ┌──────────────────────────────┐  ⌐S16
        │    DETERMINE CONNECTION LINES │
        └──────────────────────────────┘
                        │
                        ▼
      ┌─────────────────────────────────────┐  ⌐S17
      │   PROJECT CAPTURED IMAGES IN PANORAMA│
      │          COORDINATE SYSTEM          │
      └─────────────────────────────────────┘
                        │
                        ▼
      ┌─────────────────────────────────────┐  ⌐S18
      │     CONNECT CAPTURED IMAGES AND      │
      │      GENERATE PANORAMA IMAGE        │
      └─────────────────────────────────────┘
                        │
                        ▼
                    (  END  )
```

# FIG. 5

# FIG. 6

# FIG. 7

FIG. 8

# FIG. 9

# FIG. 10

EP 2 330 812 B1

FIG. 11

# FIG. 12

EP 2 330 812 B1

FIG. 13

SWEEP AXIS

PROJECTION
DIRECTION

I0 I1 I2 I3 I4

SWEEP AXIS

I0 I1 I2 I3 I4

P12

FIG. 14

FIG. 15

FIG. 16

# FIG. 17

EP 2 330 812 B1

## FIG. 18

# FIG. 19

EP 2 330 812 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003198902 A
- US 6456323 B1
- US 6157747 A
- JP 2009247758 A

**Non-patent literature cited in the description**

- **KENSHO IIYOSHI ; WATARU MIHASHI.** Image Mosaic Generation Method for Generating Panorama Image. Japan Industrial Publishing Co., Ltd, 05 August 2008, 6-11